(19) Europäisches Patentamt
European Patent Office
Office européen des brevets

(11) **EP 4 429 251 A1**

(12) **EUROPEAN PATENT APPLICATION**

(43) Date of publication:
**11.09.2024 Bulletin 2024/37**

(21) Application number: **24160999.9**

(22) Date of filing: **01.03.2024**

(51) International Patent Classification (IPC):
**H04N 19/597** (2014.01)   **H04N 19/94** (2014.01)
**G06T 15/06** (2011.01)   **G06T 17/20** (2006.01)

(52) Cooperative Patent Classification (CPC):
**G06T 17/205; G06T 15/06; H04N 19/597;**
**H04N 19/94;** G06T 2210/12; G06T 2210/21;
G06T 2210/36

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.03.2023 GB 202303378**
**08.03.2023 GB 202303377**

(71) Applicant: **Imagination Technologies Limited**
**Kings Langley, Hertfordshire WD4 8LZ (GB)**

(72) Inventor: **Smith-Lacey, Peter**
**Kings Langley, WD4 8LZ (GB)**

(74) Representative: **Slingsby Partners LLP**
**1 Kingsway**
**London WC2B 6AN (GB)**

(54) **DATA COMPRESSION AND DECOMPRESSION METHODS AND SYSTEMS IN RAY TRACING**

(57)   There is provided a method of compressing data for representing displacement information in a ray tracing system, wherein the displacement information indicates displacements to be applied to geometry in a scene to be rendered by the ray tracing system. The method comprises: retrieving a pair of datasets representing the displacement information, wherein a first of the datasets comprises a first array of values, and a second of the datasets comprises a second array of values; retrieving values from a corresponding array position in each of the first and second arrays, wherein the retrieved values form a pair of values representing an upper and lower bound of a magnitude of displacement for the corresponding array position. The method comprises identifying which of a plurality of predetermined conditions the pair of values satisfies, and encoding the pair of values as a single value in a compressed dataset, wherein the single value represents the identified predetermined condition.

To be accompanied, when published, by FIGURE 11A of the accompanying drawings.

FIGURE 11a

**Description**

CROSS-REFERENCE TO RELATED APPLICATION

This application claims priority from UK patent application GB2303377.2 filed on 8 March 2023, and from UK patent application GB2303378.0 filed on 8 March 2023, which are both herein incorporated by reference in their entirety.

TECHNICAL FIELD

The present disclosure is directed to techniques of performing compression and decompression of data for use in ray tracing systems.

BACKGROUND

Ray tracing is a computational rendering technique for generating an image of a scene (e.g., a 3D scene) by tracing paths of light ('rays') usually from the viewpoint of a camera through the scene. Rays are often traced towards a light source (e.g., shadow rays), though generally are traced towards (potential) scene geometry. For example, primary rays are modelled as originating from the camera and passing through a pixel into the scene. As a ray traverses the scene it may intersect objects within the scene and may also spawn further rays. The interaction between a ray and an object can be modelled to create realistic visual effects.

Rendering an image of a scene using ray tracing may involve performing a large number of intersection tests, e.g., billions of intersection tests. The objects themselves are normally represented using a plurality of polygonated 2D surfaces, whose atomic elements are often called 'primitives' (for example, triangles). The intersection tests therefore concern the interaction between rays and the primitives used to represent an object. However, it is usually not necessary or helpful to exhaustively perform intersection tests for every ray against every primitive in a scene.

In order to reduce the number of intersection tests that need to be performed, ray tracing systems can generate acceleration structures, wherein each node of an acceleration structure represents a region within the scene. Acceleration structures are often hierarchical (e.g., having a tree structure) such that they include multiple levels of nodes, wherein nodes near the top of the acceleration structure represent larger regions in the scene (e.g., the root node may represent the whole scene), and nodes near the bottom of the acceleration structure represent smaller regions in the scene. A "tree node" refers to a node which has pointers to other nodes in the hierarchical acceleration structure, i.e., a tree node has child nodes in the hierarchical acceleration structure. A "leaf node" generally refers to a node which has one or more pointers to one or more primitives, i.e., a leaf node does not have child nodes in the hierarchical acceleration structure. In some examples, a leaf node may simply refer to a primitive or list of primitives. In other words, leaf nodes of the acceleration structure represent regions bounding one or more primitives in the scene. The acceleration structure can have different structures in different examples, e.g., a grid structure, an octree structure, a space partitioning structure (e.g., a k-d tree) or a bounding volume hierarchy. The nodes can represent suitable shapes or regions in the scene (which may be referred to herein as "boxes"). In some examples, the nodes represent axis-aligned bounding boxes (AABBs), or oriented bounding boxes (OBBs), in the scene. The overall hierarchy of an acceleration structure may be called a bounding volume hierarchy (BVH), or more generally an acceleration structure (AS).

The number of primitives that make up an object determines the geometric level of detail (LOD) of that object in the scene. In ray tracing systems, the geometric LOD is usually fixed with respect to a contiguous series of frames because the geometric resolution of the scene (and thus the number of primitives used to represent an object) must be known in advance in order to calculate the topology of the acceleration structure. Known ray tracing systems cannot dynamically re-adjust the geometric resolution in real time (i.e., per frame). One reason for this is that the acceleration structures typically used to make real-time ray tracing tractable restrict the geometric LOD in objects within the structure.

Known methods for adapting the acceleration structure in response to a change in geometric LOD in a ray tracing regime are 'refit' and 'rebuild'. During a refit, the size of the volumes and bounding boxes within the AS is altered. In practice, this involves changing the shapes/volumes/positions of the regions associated with nodes in the AS, e.g., the position of 'split planes', or the extents of bounding volumes in a BVH. The outcome of the refit is selected to reduce the number of ray-primitive or ray-box intersection tests. Following a refit, the topology and nodal structure of the AS is unchanged, so in particular a refit maintains the same number of nodes.

During a rebuild, the entire acceleration structure is rebuilt. For example, a rebuild may be performed where a new heuristic is applied to generate the AS, or a previous heuristic may be reapplied to reflect a change in geometric resolution. Hence, a rebuild may also be performed in response to changes in the scene, such as a change in the geometric LOD of one or models in the scene (e.g., due to the viewing distance to an object being reduced). Rebuilding some or all of the AS nodal structure dependent on a dynamic scene is costly, and generally it is not viable on most GPU hardware to perform a rebuild every frame. One further method known in ray tracing to change geometric LOD, via a change in texture LOD, is 'tessellation-free displacement mapping'.

A common way of organising an AS is to implement a (single) high-level AS called a top-level acceleration structure (TLAS), which may contain one or more 'instances' of (one or more) objects each defined using a second AS called a bottom-level acceleration structure (BLAS). Geometry defined in the TLAS is usually represented in 'world space', and geometry contained in the one or more BLASs is usually represented in 'instance space' (also called object space). Together, a TLAS and one or more BLASs make up an AS. This is a convenient way to store objects in world space, e.g., since multiple versions of the same object may be included by inserting pointers to the same BLAS in different locations (optionally with different transformation matrices applied). Leaf nodes of a TLAS usually contain a pointer to a single BLAS. Leaf nodes of a TLAS may thus be 'instance transform nodes', i.e., nodes requiring a space-coordinate transform from world space to instance space. Therefore, partial rebuilds and partial refits are possible, e.g., where only a subset of BLASs are rebuilt/refitted (resulting in a rebuild/refit of the TLAS also). However, the (partial) refit and (partial) rebuild methods can result in problems with geometric LOD changes, e.g., "popping" of objects as their geometric resolution suddenly changes due to a change in LOD model. Tessellation-free displacement mapping suffers from the fact that watertight rendering cannot be guaranteed in a variety of use cases and is also very reliant on efficient texture sampling.

In contrast, techniques exist in rasterisation regimes to dynamically change the geometric LOD (i.e., per frame). Rasterization involves defining a viewing window for a 3D scene containing geometry, and from the viewing window generating a 2D pixel array to be rendered from the 3D scene. In most rasterisation approaches, the rasterised image is generated from models comprising triangular primitives. A higher geometric LOD requires a greater number of primitives of generally smaller size. Increasing the geometric LOD is beneficial in situations where the primitives of the rasterised scene cover an excessive number of on-screen pixels. For example, if an object in a scene is rendered at a closer (virtual) distance, the straight edges of the primitives used to represent the surface of that object may become discernible and thus give the object a jagged appearance. This may be resolved by 'tessellating' (in this case meaning 'subdividing') the triangular primitives (or some other basic polygonal primitive, e.g., quad) that make up the object to generate a fine mesh of (generally triangle) primitives, and thus better approximate the appearance of a smooth surface. Any tessellated surface is an approximation to the original surface, but the accuracy of this approximation can be improved by increasing the number, and therefore generally decreasing the size, of generated primitives. The amount of tessellation/subdivision is usually determined by the geometric LOD at some granularity (e.g., per scene, object/model, face, edge, vertex, material, texture, etc.). However, use of larger numbers of triangles increases the processing effort required to render the scene.

The tessellation (i.e., subdivision) of an object's surface is performed on basic/atomic sections of the surface called 'patches'. A patch may be a polygon. For example, a patch may be square, rectangular (or a general quadrilateral, e.g., trapezium, parallelogram, or rhombus) or triangular. Although a patch, being polygonal, is represented as planar in any space (e.g., world, instance/model/object, view, etc.), the intention may be for the tessellated patch to be curved to accurately map the surface of the represented object, e.g., by having displacement mapping applied to it to form higher-order surfaces. The subdivision itself however is not performed in 3-dimensional space (e.g., world, instance/model/object, view, etc.) since this would be computationally inefficient. Instead, the tessellation is performed in 2-dimensional space, i.e., in the domain of the patch (in which the patch is planar). This 2D space may be defined in terms of (u, v) parameters and referred to as 'parametric space' or 'domain space'. It is customary for the un-tessellated patch to occupy a normalised region in 2D domain space, e.g., the set $[0,1]^2$ in the case of a quad patch. This advantageously affords simplified computation, e.g., by leveraging fixed-point arithmetic). Thus, the tessellation process can be made independent of any intended curvature present in the final displaced surface. Tessellation in rasterisation regimes may be performed ahead of time, or may be performed on the fly (e.g., on a per-frame basis, to provide continuously varying or view-dependent levels of detail). Suitable methods of tessellation are described in detail in the following disclosure.

Ray tracing methods, however, are generally not compatible with live (i.e., online/dynamic), e.g., frame-by-frame, geometric LOD updates to scene geometry. In part, this is because surfaces used in ray tracing, and their intrinsic acceleration structures, require large amounts of memory, which would make tessellating an entire surface, and necessarily updating the AS on the fly, non-viable. In other words, in ray tracing, the input surface is pre-tessellated at the required geometric resolution prior to the acceleration structure being generated. Thus, in known ray tracing methods, there is a need to rebuild the entire AS, e.g., BVH, whenever a change in the geometric resolution occurs (which is not normally feasible to implement in real-time during rendering using most current computer systems).

The embodiments described below are provided by way of example only and are not limiting of implementations which solve any or all of the disadvantages of known methods and apparatus for performing geometric LOD changes in ray tracing.

SUMMARY

This Summary is provided to introduce a selection of concepts in a simplified form that are further described below in the detailed description. This Summary is not intended to identify key features or essential features of the claimed subject matter, nor is it intended to be used to limit the scope of the claimed subject matter.

There is provided a method of compressing data for representing displacement information in a ray tracing system, wherein the displacement information indicates displacements to be applied to geometry in a scene to be rendered by the ray tracing system, the method comprising:

retrieving a pair of datasets representing the displacement information, wherein a first of the datasets comprises a first array of values, and a second of the datasets comprises a second array of values;

retrieving values from a corresponding array position in each of the first and second arrays, wherein the retrieved values form a pair of values representing an upper and lower bound of a magnitude of displacement for the corresponding array position;

identifying which of a plurality of predetermined conditions the pair of values satisfies; and

encoding the pair of values as a single value in a compressed dataset, wherein the single value represents the identified predetermined condition.

The method may comprise repeatedly performing the encoding for all pairs of values comprised in the pair of datasets, wherein the compressed dataset may comprise compressed displacement information for all information in the pair of datasets.

The pair of datasets representing displacement information may represent a mipmap having been sampled from texel data representing a texture to be applied to the geometry in the scene. Preferably, the pair of datasets represents displacement information for a particular level of detail, being a geometric or texture level of detail

The encoded single value representing the identified predetermined condition may be represented with fewer bits than each value of the pair of values. The encoded single value may be an unsigned integer. The encoded single value may be represented using 2 or 3 bits. In some examples, the pair values are each represented with 8 bits (i.e., a total of 16 bits), wherein each value in the first and second array of values is a normalised integer (in the 8 bit example, between 0 and 255) that may be representative of a normalised floating point value in the range [0, 1].

The method may comprise compressing a plurality of pairs of datasets representing displacement information to form a plurality of compressed datasets, wherein each compressed dataset of the plurality of compressed datasets may represent a different level of texture detail in the scene to be rendered.

Each cell of each compressed dataset may be generated in dependence on a plurality of regionally corresponding cells of a compressed dataset having a finer level of texture detail. The level of texture detail for each compressed dataset may corresponds to a level of geometric detail.

The a method may also comprise: decoding the compressed dataset to obtain at least one pair of values representing an upper and lower bound of a magnitude of displacement, wherein the compressed dataset is associated with a patch within the scene; determining a bounding volume that contains the patch, wherein at least one dimension of the bounding volume is determined in dependence on the pair of values; and responsive to determining that the ray intersects the bounding volume, in dependence on tessellation indications associated with the patch, subdividing the patch one or more times to obtain a plurality of patch sub-units.

The predetermined condition may be that the pair of values is encompassed by a predetermined range of values, wherein the encoded single value may represents the predetermined range. The predetermined range may relate to a magnitude of displacement (e.g., the displacement of a primitive).

One or more values available to encode the pair of values as a single value may be reserved to represent a property of a texture to be applied to the geometry in the scene. For example, the predetermined condition may be that the pair of values satisfy a predetermined condition (e.g., both values are zero) indicating a property of the texture, e.g., transparency. Some pairs of values may fall within a range, and a different pair of values may represent a special case, e.g., indicating a particular texture property.

A first of the datasets may comprise a first array of values representing minimum displacements, and a second of the datasets may comprise a second array of values representing maximum displacements, wherein the upper and lower bound of a magnitude of displacement may be represented by the pair of values as a respective maximum and minimum displacement value.

A first of the datasets may comprise a first array of values of mid-point displacements, and a second of the datasets may comprise a second array of values representing halfwidth displacements, wherein the upper and lower bound of a magnitude of displacement may be represented by the pair of values as a respective mid-point and halfwidth value

The upper and lower bound of a magnitude of displacement may be configured to define boundaries of a bounding volume, associated with a respective position of the scene, to be used by the ray tracing system.

There is also provided a hardware unit, for use in a ray tracing system, wherein the hardware unit is configured to:

retrieve a pair of datasets representing the displacement information, wherein a first of the datasets comprises a first array of values, and a second of the datasets comprises a second array of values;

retrieve values from a corresponding array position in each of the first and second arrays, wherein the retrieved values form a pair of values representing an upper and lower bound of a magnitude of displacement for the corresponding array position;

identify which of a plurality of predetermined conditions the pair of values satisfies; and encode the pair of values as a single value in a compressed dataset, wherein the single value represents the identified predetermined condition.

There is also provided a method of decompressing data to obtain data for representing displacement information in a ray tracing system, wherein the displacement information indicates displacements to be applied to geometry in a scene to be rendered by the ray tracing system, the method comprising:

retrieving a compressed dataset comprising an array of values, wherein each value of the array of values is an encoded value representing one of a plurality of predetermined conditions;
retrieving a value from the compressed dataset;
selecting, in dependence on the retrieved value, one of the plurality of predetermined conditions;
in response to determining that the selected predetermined condition represents a predetermined range of values:
generating a pair of values, wherein the pair of values collectively encodes a respective upper and lower bound associated with the predetermined range of values, wherein the upper and lower bound relates to an upper and lower bound of a magnitude of displacement.

The method of decompressing data may also comprise repeatedly retrieving and decompressing values comprised in the compressed dataset to obtain a plurality of generated pairs of values, wherein the plurality of generated pairs may form a pair of datasets representing the displacement information, wherein a first of the datasets may comprise a first array of values and a second of the datasets comprises a second array of values.

The first array of values may represent minimum displacements, and the second array of values may represent maximum displacements, and wherein each generated pair represents a respective maximum and minimum displacement value.

The first array of values may represent midpoint values, and the second array of values may represent halfwidth displacements, wherein each generated pair may represent a respective midpoint and halfwidth displacement value.

Each value of the compressed dataset may be represented with fewer bits than each value of the generated pair of values. The generated pair of values representing the upper and lower bound of a magnitude of displacement may be configured to define boundaries of a bounding volume, associated with a respective position of the scene, to be used by the ray tracing system.

There is also provided a hardware unit, for use in a ray tracing system, wherein the hardware unit is configured to:

retrieve a compressed dataset comprising an array of values, wherein each value of the array of values is an encoded value representing one of a plurality of predetermined conditions;
retrieve a value from the compressed dataset;
select, in dependence on the retrieved value, one of the plurality of predetermined conditions;
in response to determining that the selected predetermined condition represents a predetermined range of values:
generate a pair of values, wherein the pair of values collectively encodes a respective upper and lower bound associated with the predetermined range of values, wherein the upper and lower bound relates to an upper and lower bound of a magnitude of displacement.

There is also provided a graphics processing unit comprising a hardware unit according to the above described hardware unit.

There is also provided an integrated circuit definition dataset that, when processed in an integrated circuit manufacturing system, configures the integrated circuit manufacturing system to manufacture a hardware unit as described above, or a graphics processing unit as described above.

There is also provided computer readable code configured to cause any of the methods described herein to be performed when the code is run.

There may also be provided a method of performing tessellation of a patch in a ray tracing system for rendering an image within a scene, wherein the patch represents a portion of a surface of an object within the scene, the object defined in 3D space using a first space-coordinate system, the method comprising:

determining a bounding volume that contains the patch;

determining whether a ray intersects the bounding volume;

in response to determining that the ray intersects the bounding volume, and in dependence on tessellation indications associated with the patch, subdividing the patch one or more times to obtain a plurality of patch sub-units, wherein one or more of the patch sub-units does not represent a primitive;

subsequent to the subdividing of the patch, determining that at least one of the patch sub-units comprises a primitive; and

performing an intersection test between the ray and the primitive for use in rendering the image of the scene.

There may also be provided a hardware tessellation unit, for use in a ray tracing system, comprising volume intersection testing logic, tessellation logic and primitive intersection testing logic, wherein the tessellation unit is configured to:

determine a bounding volume that contains the patch;

determine whether a ray intersects the bounding volume;

in response to determining that the ray intersects the bounding volume, and in dependence on tessellation indications associated with the patch, subdivide the patch one or more times to obtain a plurality of patch sub-units, wherein one or more of the patch sub-units does not represent a primitive;

subsequent to the subdividing of the patch, determine that at least one of the patch sub-units comprises a primitive; and

perform an intersection test between the ray and the primitive for use in rendering an image of a scene.

The methods described herein (i.e., for compressing data representing displacement information in a ray tracing system or decompressing data to obtain data for representing displacement information in a ray tracing system) may be embodied in a hardware unit. There may be provided a method of manufacturing, at an integrated circuit manufacturing system, a hardware unit for performing compression of decompression described herein. There may be provided an integrated circuit definition dataset that, when processed in an integrated circuit manufacturing system, configures the system to manufacture a hardware unit as described. There may be provided a non-transitory computer readable storage medium having stored thereon a computer readable description of a hardware unit that, when processed in an integrated circuit manufacturing system, causes the integrated circuit manufacturing system to manufacture an integrated circuit embodying a hardware unit as described herein.

There may be provided an integrated circuit manufacturing system comprising: a non-transitory computer readable storage medium having stored thereon a computer readable description of the hardware unit; a layout processing system configured to process the computer readable description so as to generate a circuit layout description of an integrated circuit embodying the hardware unit; and an integrated circuit generation system configured to manufacture the hardware unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a ray tracing system according to examples described herein;

Figure 2 shows a patch oriented in instance/model/object space, and an axis-aligned bounding box (in that space) containing the patch that is intersected by a ray;

Figure 3 shows the patch of figure 2 having been transformed into patch space, wherein the patch is contained by an axis-aligned bounding box (in that space);

Figure 4a shows a first level of tessellation applied to the patch of figure 3;

Figure 4b shows a sub axis-aligned bounding box containing a sub-patch formed by tessellated regions of a patch, wherein a ray intersects the sub-bounding box;

Figure 4c shows the vertex normals of a sub-patch shown in figure 4b, where the vertex normals indicate primitive displacement;

Figure 4d shows a primitive within a sub-patch having been displaced according to the vertex normal data, and a ray intersecting the displaced primitive;

Figure 5 is a flow chart for first method of performing tessellation of a patch during traversal of a ray through an acceleration structure;

Figure 6a shows the patch of figure 2 contained by an axis-aligned bounding box, the bounding box being intersected with a different ray;

Figure 6b shows a sub axis-aligned bounding box containing a sub-patch formed by tessellated regions of the patch in figure 6a;

Figure 7a shows further tessellation of the sub-patch formed in figure 6b according to a higher level of detail, and a further sub axis-aligned bounding box containing the further sub-patch;

Figure 7b shows a primitive within the further sub-patch having been displaced, and a ray intersecting the displaced primitive;

Figures 8a to 8g show seven different single-level (aka local) tessellation patterns, and the primitives and/or sub-patches that make up the respective patterns;

Figures 9a and 9b show two examples by which an axis-aligned bounding box containing a patch may is conservatively padded;

Figure 10 shows grids indicating minimum and maximum displacement data for regions of a patch, for each respective level of detail;

Figures 11a and 11b show two examples of compressed min/max displacement data at two levels of detail;

Figure 12a illustrates the step of initially tessellating an input quad patch, figure 12b illustrates the step of further tessellating an intermediate sub triangle, and figure 12c shows an example resultant tessellation pattern for an input quad patch comprising triangle primitives generated by an initial tessellation step followed by further tessellation steps of intermediate sub triangles;

Figure 13 shows an example of how the patch in figure 12c is tessellated according to a tessellation algorithm in line with predetermined geometric levels of detail associated with the patch (i.e., per-vertex tessellation factors);

Figure 14 shows three 2D patch types and their respective (piecewise affine) transformations into 2D domain-space;

Figure 15 shows a computer system in which a graphics processing system is implemented; and

Figure 16 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

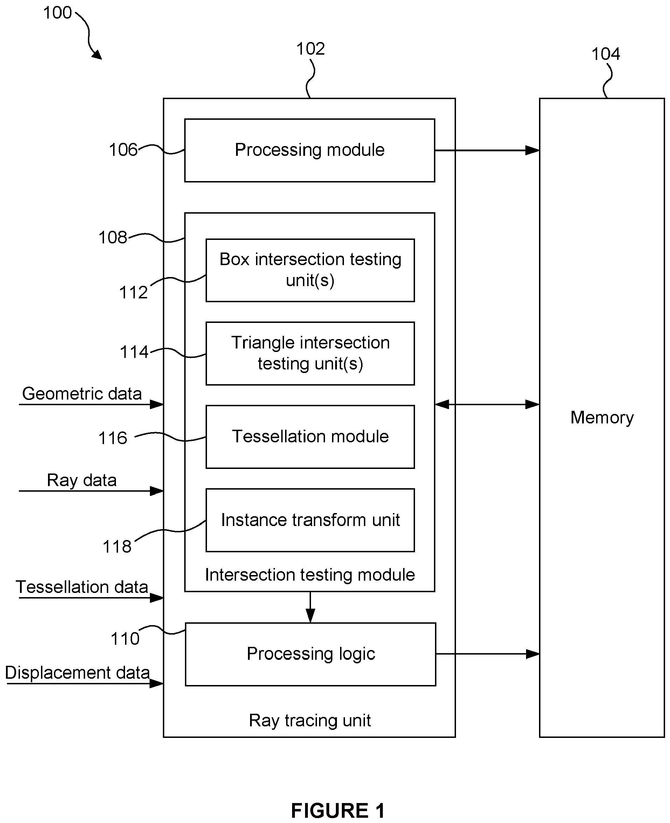

Figure 1 shows a ray tracing tessellation system 100 comprising a ray tracing unit 102 and a memory 104. The ray tracing unit 102 comprises a processing module 106, an intersection testing module 108 and processing logic 110. The intersection testing module 108 comprises one or more box intersection testing units 112, one or more primitive (e.g., triangle) intersection testing units 114 (TTU), a tessellation module 116, and an instance transform unit 118 (ITU). In some examples the intersection testing module 108 may also include one or more procedural tester units (not shown in Figure 1) for performing intersection testing with respect to procedural primitives (e.g., those generated programmatically by shader code). In operation the ray tracing unit 102 receives geometric data defining objects within the 3D scene. The geometric data may comprise geometric data on the patch forming part of the object surface, where the patch is to be tested for intersection and subsequently tessellated. The ray tracing unit 102 also receives ray data defining rays that are to be tested for intersection. The ray tracing unit also receives tessellation data (also called tessellation indications) indicating how the patch is to be tessellated. Figure 1 shows 'tessellation data' being obtained external to the ray tracing unit for simplicity. However, tessellation indications may be obtained from outside and/or inside the ray tracing unit. Thus, in practical examples, the tessellation indications may be partially (or entirely) generated from within the tessellation module 116.

Tessellation indications generally comprise any data used by the tessellation module 116 to generate new geometry by subdivision. Tessellation indications thus determine the topology (i.e., connectivity) of the final surface. Tessellation indications that are generally received externally from ray tracing unit 102 may comprise one or more of: prebaked vertex attributes, samples from a tessellation map/texture, the results of a shader invocation, and some combination thereof. Some or all of these attributes may also be referred to as displacement data, e.g., if they are also used to determine displacement information (e.g., displaced positions of tessellated vertices, or extents of bounding boxes of sub-patches). Displacement data generally determines geometry (e.g., position, length, area and the like) of the final surface. In some cases, the contents of the displacement data overlaps with tessellation data, though these two data are labelled separately in figure 1. Nevertheless, the tessellation indications may also be generated within the tessellation module 116, e.g., as a fixed-function result of the geometric and ray data (e.g., based on relative positions/orientations).

The rays may be primary rays or secondary rays (e.g., shadow, ambient occlusion, reflection, refraction, global illumination (radiosity), or subsurface scatter rays, etc.). The processing module 106 is configured to generate a set of secondary acceleration structures based on the geometric data (i.e., a set of BLASs), and to further generate a single primary acceleration structure (i.e., a TLAS) based on the set of secondary acceleration structures, and to store the primary acceleration structure and set of secondary acceleration structures, e.g., in global memory (not shown in figure 1). For simplicity, figure 1 indicates only memory 104, which is not generally intended to store an entire AS. For example, the memory 104 may be local memory used to store a portion of the AS (e.g., one or more BLASs). Generally, Memory 104 will be utilised to store only as much of the AS that is needed by the ray tracing unit 106 at one time to perform traversal, e.g., enough data to tessellate a particular patch or set of patches. Memory 104 may be a local cache.

In general, each leaf node of a primary AS (e.g., a TLAS) comprises: instance transform data/information, a pointer to a BLAS(s), and a bounding volume (i.e., bounding an object defined within a BLAS). A second acceleration structure represents the hierarchy of one or more model's/object's geometry sharing an instance transform (and being a strict subset of the entire scene), and in examples is referred to as a bottom-level acceleration structure (BLAS). A leaf node of each BLAS generally comprises a primitive, or a list of primitives. In most examples corresponding with the present disclosure, each BLAS leaf node contains a patch (which contains a plurality of primitives when tessellated) or a list of patches. Alternatively, pointers may be utilised at the leaf nodes, i.e., such that a BLAS leaf node contains a pointer to any of: a primitive; a list of primitives; a patch; and list of patches. BLAS leaf nodes also comprise a bounding volume (which bounds the patch or patches), and patch transform data (i.e., used to apply a transformation from instance space into patch space). As described below, a further, tertiary, AS for the patch is implicitly generated on the fly during tessellation and traversal of the patch.

The position of the processing module 106 in figure 1 is merely exemplary; in other cases, the processing module 106 may fall outside the ray tracing unit 102 (e.g., the accelerations structures are generated separately from the ray tracing unit, such as in a CPU). After every BLAS has been generated and stored, the intersection testing module 108 can retrieve nodes (comprising data defining, or used to define, the bounding boxes (e.g., AABBs) corresponding to the nodes) of the acceleration structure from the memory 104 to perform intersection testing of rays against the retrieved nodes. The (axis-aligned) bounding boxes in some examples will contain larger portions of an object (e.g., when higher up in the hierarchy of the BLAS), and in other examples will contain smaller portions of an object (e.g., when lower down in the hierarchy of the BLAS), such as the bounding volume of a single patch or small list of patches. In the following disclosure, a patch is considered a planar (generally polygonal) portion of the surface of an object, which may be further tessellated/subdivided into a plurality of primitives. The volume (e.g., box) intersection testing unit(s) 112 (BTU) performs intersection tests to determine whether or not a ray intersects each of the bounding volumes corresponding to nodes of the acceleration structure (where a miss can cull vast swathes of the hierarchical acceleration structure). The traversal along the BLAS, comprising intersection tests with the bounding volumes (e.g., AABBs), continues until the intersection testing module 108 reaches a node that contains only a bounding volume of a patch, or possibly a small list of patches. This node represents a leaf node in the BLAS.

In the following disclosure, bounding volumes or bounding boxes, and the like, are, by way of example, presumed to be axis-aligned unless otherwise indicated (e.g., such as an oriented bounding box). If the box intersection testing unit (BTU) indicates a hit with the bounding volume's AABB (fetched from the leaf node of the BLAS) containing the patch, the ray and patch are transformed into a parametric space in which the patch is planar and where the edges of the patch are axis-aligned with the parametric space. In examples, no explicit transformation is performed for the patch, because the space-coordinate system (2D domain space) is derived with reference to the dimension of the patch meaning that the patch becomes implicitly transformed once defined in domain space. For example, in examples where the patch is a quad patch, the instance-space to domain-space transform is specifically chosen such that corner vertices of the patch will be mapped to (algorithmically convenient) predetermined values, e.g., the corners of the patch being mapped to the corners of the set $[0,1]^2$, i.e., $\{0,1\}^2$.

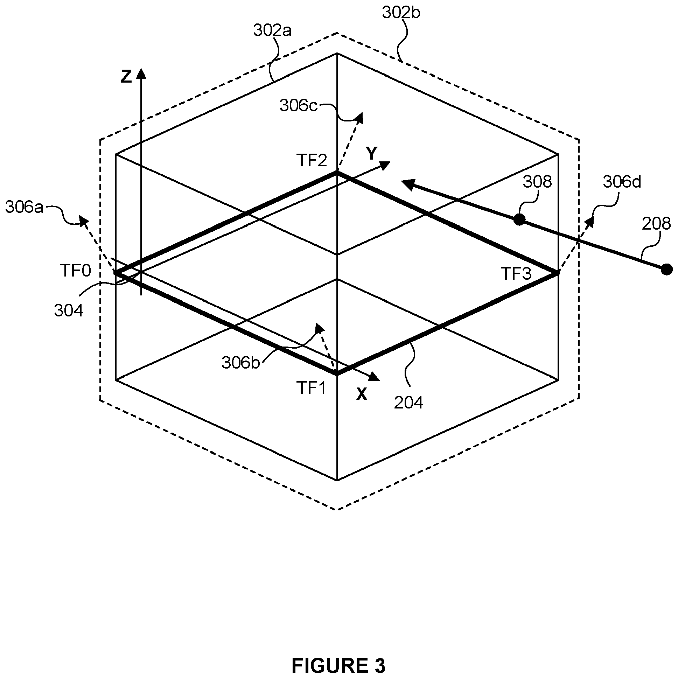

Advantageously, the ITU 118 that is used to transform from world space to instance space may also be utilised to perform the transform from instance space to patch-based parametric space. The attributes of the transform from TLAS to BLAS are stored in (or pointed to by) TLAS leaf nodes, and from BLAS to domain space are stored in (or pointed to by) BLAS leaf nodes. In some cases, the transform information may be explicit (e.g., a matrix transform), or may be derived based on attributes such as corner vertices of a patch. In rasterisation tessellation regimes, such a 2D parametric space may also be referred to as 'domain space'. In the present disclosure, a further 3-dimensional bounding volume/AABB is generated around the 2D patch for testing with the BTU, by extending the parametric domain into 3-dimensional space, such as shown in figure 3. This 3D space is referred to as 'patch space', in which two axes of the space lie within the plane of the patch, and the third axis is orthogonal to the plane of the patch (i.e., parallel to the normal of the patch), or otherwise does not lie in the plane of the patch. The extents of this AABB are determined according to indicated positive and negative displacement in each axis (which may be a maximal displacement), where this displacement is assumed to be along the direction of the normals associated with each corner vertex of the patch, or along the direction of any normal that may be interpolated from these corner normals.

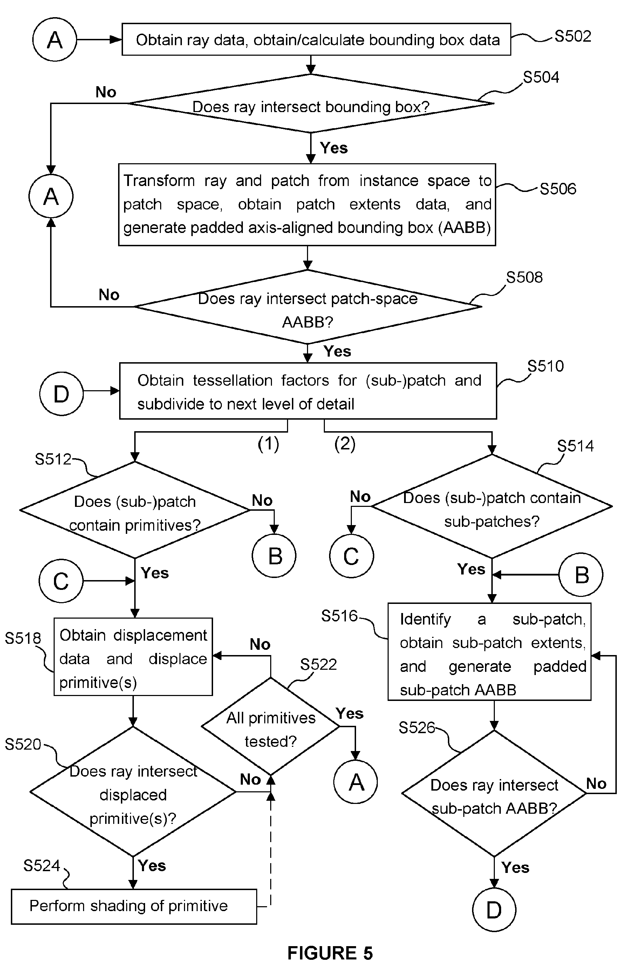

The BTU 112 may test a new AABB containing the patch, axis-aligned in respect of the patch space. In response to a hit, the tessellation module subdivides the patch according to tessellation data. Subsequent intersection tests with the BTU and tessellation operations proceed recursively, dependent on factors such as further 'hits' with new sub-AABBs and the tessellation data. This recursive method of tessellation is described in detail with respect to several examples in the following disclosure, and in figure 5. The recursion proceeds until no more tessellation is required for a given ray, equivalently a sub-patch containing only primitives is reached within the patch wherein the primitives are tested for intersection with the ray, and/or the ray is determined to miss the AABBs of all outstanding sub-patches. During the recursive tessellation and intersection testing, a new (implicit) hierarchical structure is obtained, which contains the newly-tessellated sub-units of the patch. In otherwords, nodes of the hierarchy pertain to sub-patches or sub-triangles (where those sub-triangles are primitives). This hierarchy is referred to as a patch-level acceleration structure (PLAS). The PLAS is unique to each ray, i.e., each ray may generate a different hierarchical structure since each ray may induce a different tessellation pattern and/or a different LOD, as a result of different tessellation indications. The PLAS is implicitly generated on-the-fly, meaning that it is never fully constructed and stored, but instead partially constructed during traversal. A PLAS leaf node is generally a sub-triangle for which no further subdivision can occur, i.e., where the sub-triangle is a primitive. The PLAS may be stored in memory and/or cached for subsequent use by other rays. For example, a packet of bundled rays, or coherent rays, may utilise the same PLAS such that tessellation is not re-performed. The triangle intersection testing unit 114 (TTU) performs intersection tests with one or more of the primitives, once they are generated and/or reached during traversal.

The results of the tessellation and intersection testing are provided to the processing logic 110. The processing logic 110 is configured to process the results of the intersection testing to determine rendered values representing the image of the 3D scene. The processing logic obtains attribute data to perform the shading, though this is not shown in figure 1 for simplicity. The rendered values determined by the processing logic 110 can be passed back to the memory 104, or stored in some other storage area such as global memory (not shown) for storage therein to represent the image of the 3D scene. References to LOD (level of detail) in the present disclosure generally refer to a geometric LOD, unless specified as pertaining to another type of LOD (e.g., texture LOD).

As mentioned, memory 104 shown is generally local memory to the ray tracing module, though in embodiments the processing module 106 and processing logic 110 may store their respective inputs/outputs in any of global memory (not shown) or local memory (such as a local cache) as appropriate, and in a manner that would be derivable by the skilled person. Furthermore, the data inputs to the ray tracing unit 108 (geometric data, ray data, tessellation data, and/or displacement data) may actually be received directly from a local memory, e.g., 104 (to improve the efficiency associated with fetching data used for traversing a PLAS), or from another external storage location e.g., global memory.

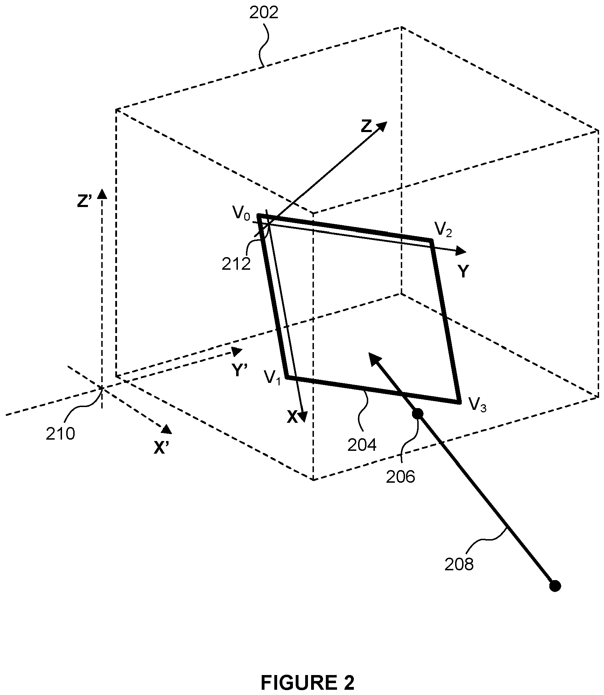

Figure 2 shows a patch 204 oriented in object space 210. In the present example, the coordinates of the patch

204 satisfy $V_3 = V_1 + V_2 - V_0$, i.e., such that the patch is a parallelogram in instance space. The parallelogram also satisfies $|(V_1 - V_0) \times (V_2 - V_0)| > 0$, i.e., the patch is non-degenerate (otherwise it can be assumed that any ray testing against it automatically results in a miss). Reference to model/object space in the following disclosure is interchangeable with 'instance space', and represents the 3D coordinate-space used to represent the geometry of one or more objects sharing a local space, and the patches used to form the surface of those objects. The patch 204 in this example is a parallelogram, though other patch configurations (e.g., triangles, or non-parallelograms) are possible as described in the following disclosure. The patch 204 is oriented according to object space, i.e., aligned with the surface of an object it is representing. The plane of the patch is indicated with respect to patch axes 212. Only one patch is shown, though the surface of an object is represented by a plurality of (usually) contiguous patches (not shown), such that the patches (usually) form a continuous surface with no holes. The bounding box 202 shown is axis-aligned with respect to object space axes 210, and is not aligned with the plane of the patch 204. Vertices of the patch are $V_0$, $V_1$, $V_2$, and $V_3$. A ray 208 is indicated which intersects the bounding box 202 at an intersection point 206. In instance/object space, the bounding box 202 is not configured to tightly bound the 2D patch (i.e., there is free space, e.g., in its normal direction). However, this may be deliberately done, i.e., the object-space bounding box may be arranged to conservatively bound the patch for any combination of tessellation and displacement. For example, the bounding box 202 may be constructed to tightly bound an oriented bounding box, OBB, (not shown) that conservatively bounds any tessellated and/or displaced version of the patch.

The bounding box 202 represents a leaf node of a bottom-level acceleration structure (BLAS), because it contains one or more pointers to one or more patches, i.e., represents regions bounding one or more patches in the scene. Only one patch 204 is shown in figure 2. The ray 208 is tested for intersection with the object-space bounding box202, preferably by a boxtesting unit (BTU), as would be understood by a person skilled in the art. In response to a hit (indicated at 206), the patch 204 will be subsequently tested, after any tessellation of the patch as determined by the tessellation indications, to determine whether the ray intersects sub-patches or primitives generated from the patch by tessellation.

In some examples, it is possible to perform intersection testing with the patch in instance space, without a transformation to patch space. For AABBs aligned with instance space (e.g., 202), however, resources are not as efficiently utilised due to the degree of misalignment between the plane of the patch and the axes of the instance/object space. In a second example, a new oriented bounding box (OBB) may be generated in object space (not shown), which is aligned with the plane of the patch and, as mentioned above, conservatively bounds any tessellated and/or displaced version of the patch. However, performing box tests with a non-axis-aligned box may suffer latencies or additional power/area costs that are intrinsic with OBB box tests. Thus, to perform further box intersection tests and tessellation on the patch, it is advantageous to use boxes that are both axis-aligned with the coordinate system, and bound the patch (or sub-patch) tightly. Thus, present embodiments transform the ray into parametric space where, by definition, the edges of the patch are axis-aligned, meaning that a bounding volume can be generated that is axis-aligned and that tightly fits around the patch. Preferably (and as with bounding volumes in general), the bounding volume is constructed in a conservative manner so as to mitigate false-negative hits. Advantageously, this allows existing BTUs, e.g., which are already present in the ray-tracing hardware, to be utilised to perform the further intersection tests. Box testing against an AABB is also more efficient from an algorithmic perspective than against an OBB. Moreover, box testing with a tightly bound box avoids wasted overlap between bounding volumes of adjacent patches, and thus reduces overall latency. The reduction in latency is more pronounced for smaller patches or sub-patches, i.e., where the extent of displacement applied to the AABB is more significant compared to the size of the patch.

Figure 3 shows the patch 204 from figure 2 having been transformed into parametric 3D space in which the plane of the patch is aligned with the axes 304 of the space - i.e., patch space. In rasterisation regimes such a space is 2D, however the present ray tracing embodiments use 3D patch space due to the bounding volumes constructed around the patch. The patch 204 is contained within an axis-aligned bounding box 302a (AABB), however this AABB 302a is strictly fitted to the edges of the patch. A further, expanded, axis-aligned bounding box 302b is thus generated around the AABB, where the expanded, or 'padded', box is used in examples for the purposes of intersections tests to ensure conservative intersection testing (i.e., to mitigate or avoid false negatives) when displacement along the normals of vertices generated by tessellation is being employed. In practice, only the padded volume 302b is generated, though the tight-fitting box 302a is shown here for illustrative purposes. Padding bounding volumes helps to provide a 'watertight' ray-tracing method and thus avoid artefacts such as cracks in the rendered scene, e.g., resulting from erroneous clipping of displaced primitives. The intersection point 308 shown is with respect to padded AABB 302b.

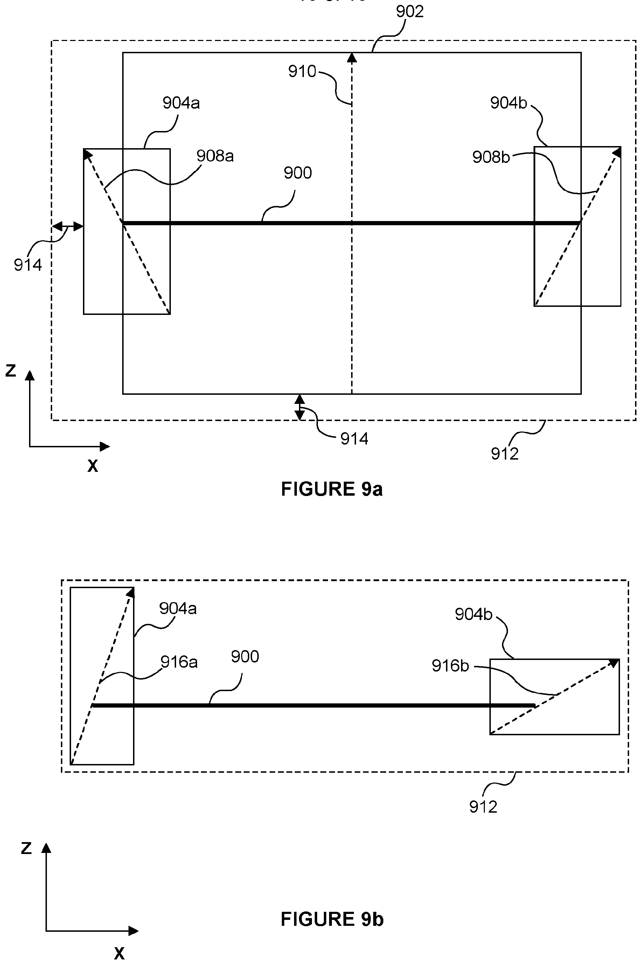

The patch 204, being a quad, is associated with four vertex normals (306a-d) shown by the four arrows. These indicate the direction of the displacement of the final intersected surface described by the patch. Prior to the final displacement of the primitives, the vertex normals are used, along with a pair of minimum and maximum displacement values, to calculate the padded bounding box (though displacement will not occur if the ray is not found to intersect with any of the lowest level sub-patches within the patch-level acceleration structure). The calculation of padding for bounding volumes according to the present disclosure is described with respect to figure 9.

The vertex normals 306a-d encode at least part of the displacement of the primitives contained in the patch, along with the minimum and maximum displacement values. Four tessellation factors (TF0, TF1, TF2, TF3) are indicated at the vertices of the patch, which provide the information required to subdivide the patch. These tessellation factors form at least part of (and may form the entirety of) the tessellation indications used by the tessellation module 116. Preferably, a patch is initially associated with four tessellation factors (or generally, one tessellation factor per patch corner vertex). It should be noted that the examples of tessellation schemes in the present disclosure use tessellation factors that are generated at the per-vertex granularity, however, other examples may generate tessellation factors at other granularities, e.g., per scene, object/model, face, edge, vertex, material, texture, and the like. A pre-determined tessellation algorithm determines how subdivision should proceed based on the tessellation factors. Methods of tessellation are described in detail in the following examples. Following a 'hit' 308, i.e., when intersection is determined between the ray and the padded AABB 302b, the patch 204 is tessellated according to the tessellation indications (TF0, TF1, TF2, TF3) to determine what intersection test to perform next.

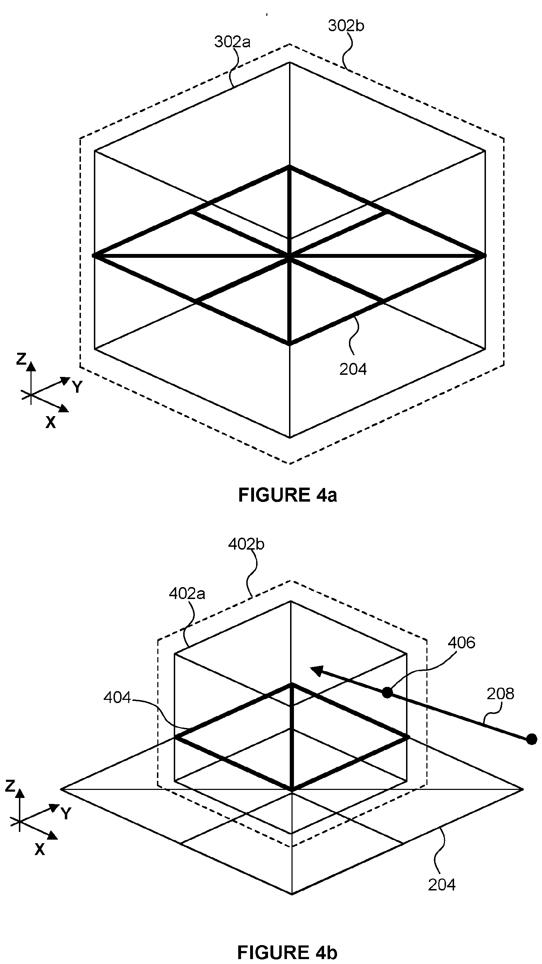

Figure 4a shows the subdivided patch 204 in patch space, in which the subdivision involves initially subdividing the quad patch into four triangles, and then bisecting each triangle into two sub-triangles within the patch. When bisecting triangles into sub-triangles, a preferred subdivision operation involves generating a new edge between an existing vertex (for a right-angled triangle, the vertex associated with the right-angled corner) and a point on an existing edge (for a right-angled triangle, the hypotenuse) that bisects that edge into two sub-edges, one for each of the sub-triangles. The subdivided patch 204 contains eight sub-units, all of which are triangles, and which themselves can be grouped into four 'sub-patches', i.e., 'sub-quads'. The four sub-patches are squares, and thus have the same relative proportions as (i.e., are similar to) the parent patch 204. It may not yet be known whether the triangles are primitives, i.e., whether they are further subdividable. It is not determined at this stage whether the patch sub-units are primitives, since the next step in the algorithm is a box intersection test. In general, methods of the present disclosure perform volume-ray intersection tests in preference to primitive-ray intersection tests, because volume-ray tests may be used to rule out a large number of primitives and thus avoid testing excessive primitives. Furthermore, volume-ray tests can be used to rule out unnecessary tessellation. Yet further, volume-ray intersection tests are generally computationally cheaper to perform than primitive-ray intersection tests (in particular when the volume is an AABB). Therefore, it is preferable to increase the ratio of volume-ray tests to primitive-ray tests, and thus to rule out as many expensive primitive tests as possible (which would be performed by the TTU 114) using cheap volume-ray tests performed by a BTU 112. In this way, an advantage of the present method is that the tessellation (i.e., subdivision) of the patch into sub-patches and/or primitives is performed only on regions of the patch where the ray is determined to intersect. Advantageously, this obviates the need to pre-tessellate the entire surface prior to ray tracing, as the traversal of the ray through the patch determines which regions of the patch to tessellate based on which volume-ray intersection tests are successful.

Figure 4b shows one sub-patch 404 within the larger patch, which contains two triangles. A new AABB 402a is formed around the sub patch. As with the parent patch 204 in figure 3, the AABB 402a of the sub-patch 404 is expanded to form a padded AABB 402b to provide for conservative box-intersection testing (which again provides an inherent watertightness to the final render). The sub-AABB for all sub-patches are conservatively constructed in this way (e.g., padded) so that the AABBs for neighbouring sub-patches overlap. This guarantees that a ray which should intersect with a primitive in the patch will also intersect with any sub-patch AABBs higher up the PLAS that are supposed to be bounding it. The ray 208 is shown to intersect the padded sub-patch AABB 402b at an intersection point 406.

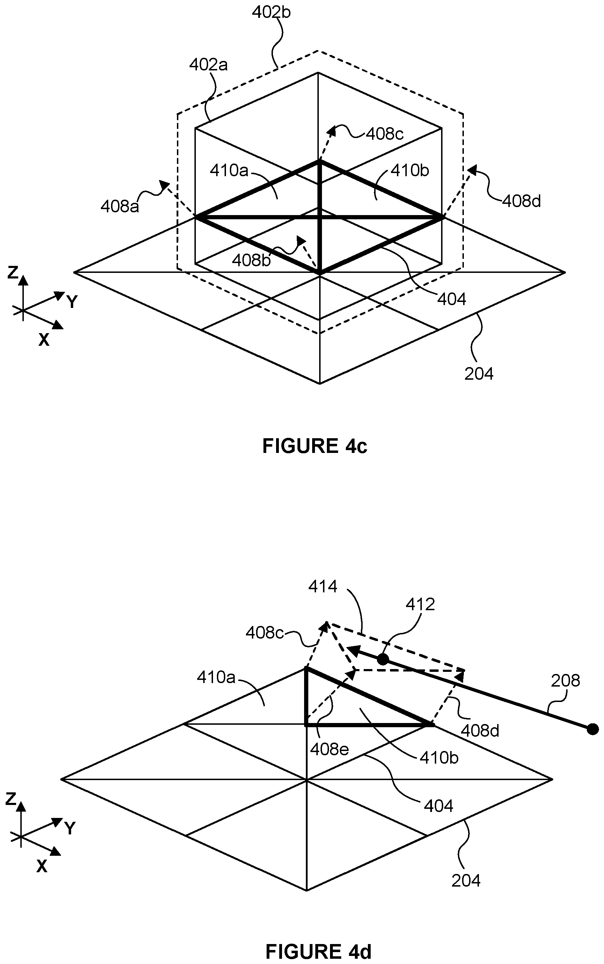

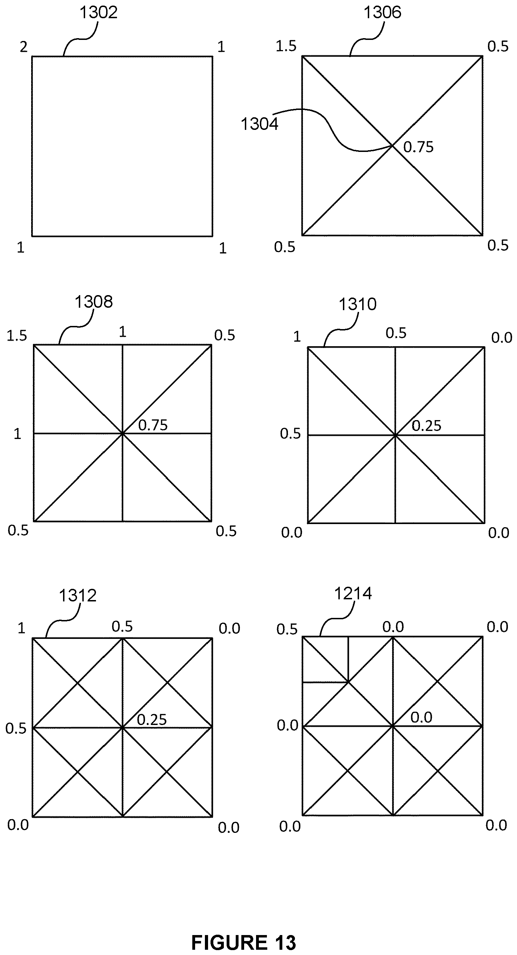

Figure 4c shows a further level of tessellation having been applied to the sub-patch 404, in response to the 'hit' 406, shown in Figure 4b, between the ray 208 and the padded sub-patch AABB 402b. The new tessellation subdivides the two triangles (by bisection) shown in figure 4b to form four new triangles (e.g., 410a, 410b). The result of the preferred tessellation step is four triangles of equal size. The newly-formed triangles represent a new level of detail in the sense that the patch is now defined with finer granularity. The tessellation indications are updated in response to the subdivision (the method of updating the tessellation data in the preferred tessellation method is described in detail in respect of figure 13). In this example, it is determined based on the updated tessellation indications that the four triangles are not to be further subdivided. It is therefore inferred that the four triangles are primitives, i.e., the smallest unit of an object surface which is to be intersected and shaded/rendered. In order to test the primitive for intersection with the ray, each vertex of the primitive is displaced according to displacement data (e.g., vertex normals, and/or any (normalised) texture map or other displacement function, and/or a minimum and maximum displacement value) associated with the patch. This displaces each vertex of the primitive beyond the XY plane of the patch (i.e., parametric/domain space) into the third axis of the patch space.

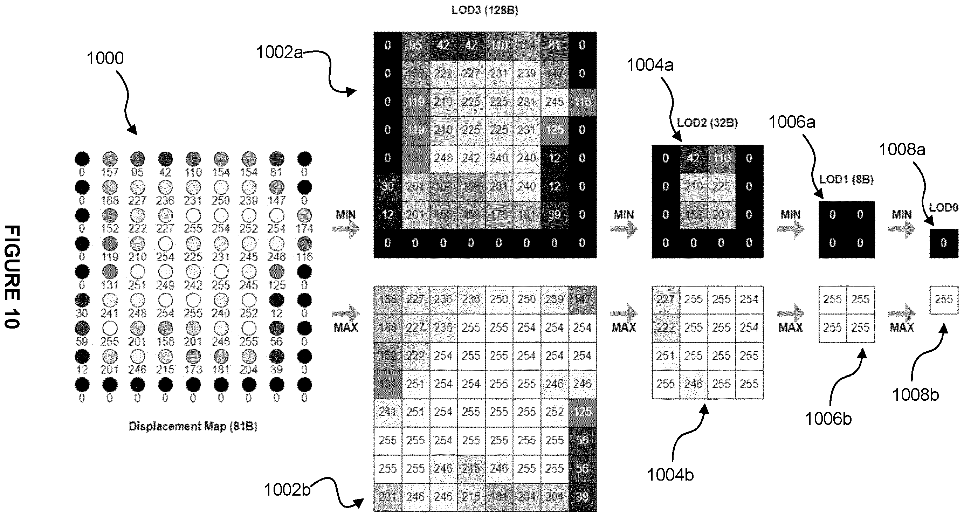

Figure 4d indicates that the vertices of one primitive 410b of the sub-patch 404 are displaced to new positions forming a displaced primitive 414 relative to the plane of the patch. The vertex normals associated with the original patch (306a-306d) are used to calculate the normals associated with the vertices of the un-displaced primitive (408c, 408d, 408e), which may be done by linear interpolation (with or without renormalisation) after generation of vertices of primitives during tessellation. When normals are not renormalised, normals generated for sub-patches during PLAS traversal may be reused as input to sub-interpolating normals of vertices generated further down the PLAS hierarchy after additional tessellation. Calculation of new vertex normals may also be achieved by repeated interpolation at each level of the PLAS. The vertex normals (408c, 408d, 408e) encode the direction of displacement, though not necessarily the magnitude (the normals are shown as extending to the vertices of the displaced primitive 414 merely for convenience). In addition to the vertex data, displacement data is obtained which perturbs vertex positions along interpolated normals, resulting in displaced primitives in 3D patch space. The displacement data may pertain to a texture, or in other examples may be supplied by a displacement function. Generally, the displacement data may be obtained in various different ways, for example: the original user-supplied displacement map/function can be sampled (e.g., by an interpolation scheme), per-vertex, as needed (1000 in Fig. 10).

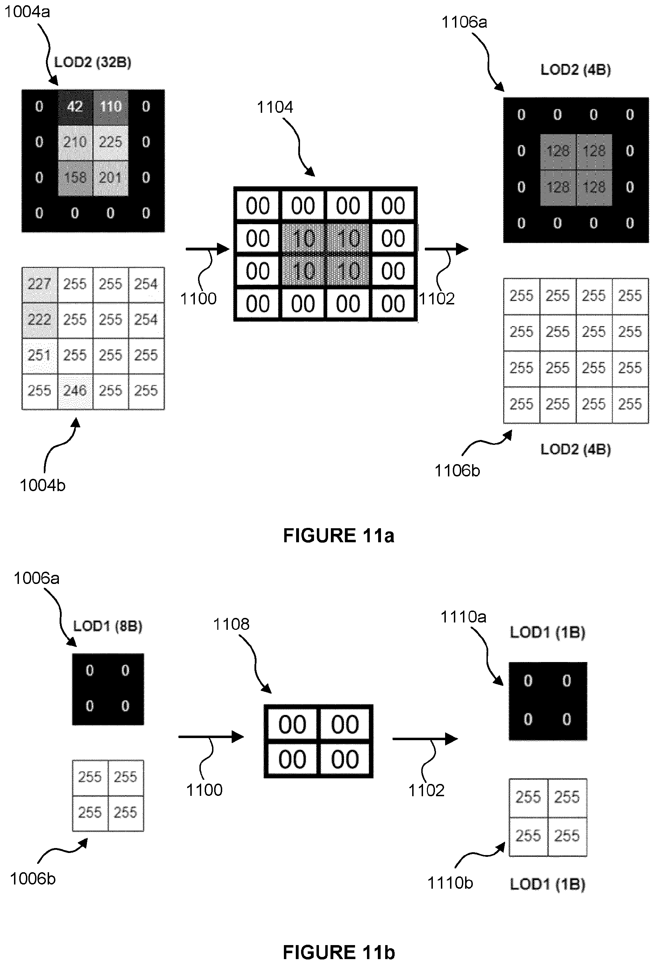

The original user-supplied displacement map may be mipmapped to avoid latency attributable to sampling with reduced aliasing, but at the expense of storage (mipmapping uses up to 33% more storage); moreover, doing so may result in having to sample the mipmapped displacement data at every LOD in the construction below. The sampled displacement data (possibly adjusted for the worst-case values across all texture LODs when mipmapping the original user-supplied displacement map) can be used to produce a min/max map at the highest LOD. From this min/max map of the sampled data, a min/max mipmap, i.e., a chain of maps/tables at each level of detail (i.e., from the highest LOD down to the zero LOD), can be generated. In the examples described below, this series of mipmapped min/max tables is generated offline and stored (as seen in figure 10, 1002a-1008a) in global memory or (partially) in local memory. This is advantageous because, for example, the (sampled) original user-supplied displacement map 1000 may be used primarily to generate the min/max mipmap offline, and thus does not need to be fetched/stored in local memory for the purposes of generating and traversing bounding volumes in the PLAS, nor need to be processed on-the-fly with associated cost. The (sampled) original user-supplied displacement map 1000 is nevertheless used to obtain exact displacement information for displacing primitives, as described in more detail below. It will be appreciated that the primary benefit of the min/max mipmap is to make the process of providing displacement minima and maxima (at each LOD) an offline process (and thus, as mentioned, avoid the cost of on-the-fly processing of the user-supplied displacement map). As mentioned, the multiple tables that comprise the min/max mipmap have greater storage requirements; nevertheless, the present disclosure provides a compression scheme (described in respect of figures 11a and 11b), which offsets this data expansion. It will nevertheless be appreciated that, even without compression, the min/max mipmap is still advantageous, since the lower level-of-detail tables (e.g., LOD1 = 8B, and LOD2 = 32B) are most frequently used, and have a combined footprint (40B) that is still smaller than the footprint of the sampled original user-supplied displacement map 1000 (81B).

The values in a displacement map/function are usually considered to be normalised values, i.e., values in the closed interval [0,1]. For example, if an 8-bit displacement map is used then an encoding of 255 is treated as a value of 1, etc. The closed interval [0,1] is modified into an arbitrary interval, with a small amount of affine arithmetic, using a supplied minimum and maximum displacement value. Displacement information for each primitive is thus a combination of patch-vertex normals and displacement data (including minimum and maximum displacement values). Displacement data can require a large amount of memory/bandwidth to store/fetch, particularly if it is a high-resolution bit-deep texture map. Preferred methods of handling displacement data efficiently are disclosed in respect of figures 10 and 11.

Advantageously, the displacement data for each primitive within the patch does not need to be fetched for the entire patch or during traversal of non-leaf nodes of the PLAS. The final displacement data for a tessellated primitive is only obtained (e.g., via a local texture sample) at the moment at which the primitive is required to be displaced for ray-primitive intersection testing. Prior to this, only 'worst-case' displacement information, aka min/max mipmap, is fetched and/or stored locally (e.g., in the patch data), which is used to determine the extent of the padding for the AABBs for patches and sub-patches at each level of detail (LOD), and may be generated offline (e.g., during the AS build process) once only, and stored as per-patch data in the hierarchy and/or alongside its displacement map in global memory. Furthermore, the compressed min/max mipmap may be used which contain conservative values of the minimum and maximum displacement values (again, at each given level of detail) but at significantly reduced memory footprint/bandwidth. This has the advantage that the displacement values for a given level of detail need not be calculated during traversal from fine-grained (i.e., high-resolution or bit-deep) displacement values, which would be bandwidth intensive, but can simply be read from a compact quantised array, which is more conducive to caching in local memory. Compression of a mipmap in this way is described in more detail in respect of figure 11.

Once the primitive has been displaced to primitive 414, it is tested for intersection with the ray 208. Preferably, existing hardware such a triangle testing unit (TTU) is utilised to perform the intersection test. In response to a 'hit' 412, this causes or instructs a shader to execute (e.g., an any-hit shader, or closest-hit shader, etc.) with the intersection information (e.g., winding, barycentrics, distance, etc.), along with the patch vertex attributes, as input. Primitive-ray intersection tests may subsequently be carried out for all primitives within the sub-patch, e.g., in this case the other three primitives in the sub-patch 404, where the ray may be found to miss those three primitives and hence no shader is invoked for them. Following the ray versus primitive intersection test(s), ray traversal continues (e.g., along the bottom-level and/or top-level acceleration structure (BLAS and/or TLAS)). Traversal may also continue along the patch-level acceleration structure (PLAS), for example when a sub-patch contains additional untested sub-patches (for which further subdivision may be possible). In yet further examples, it may be determined that the ray does not intersect the first sub-patch AABB tested, in which case no tessellation and no primitive-intersection tests are performed within that first sub-patch, and traversal of the PLAS then continues by testing a different AABB associated with a different sub-patch.

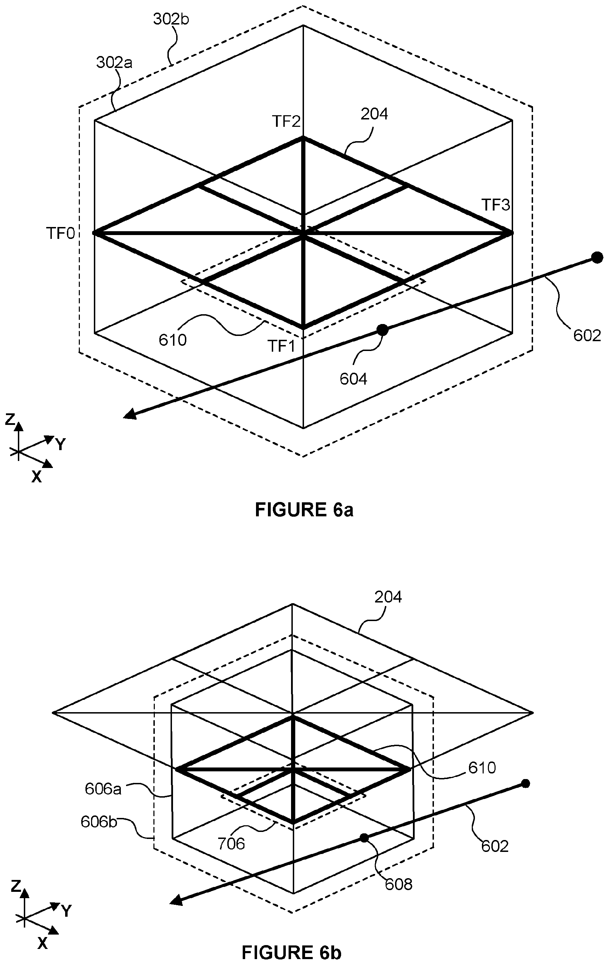

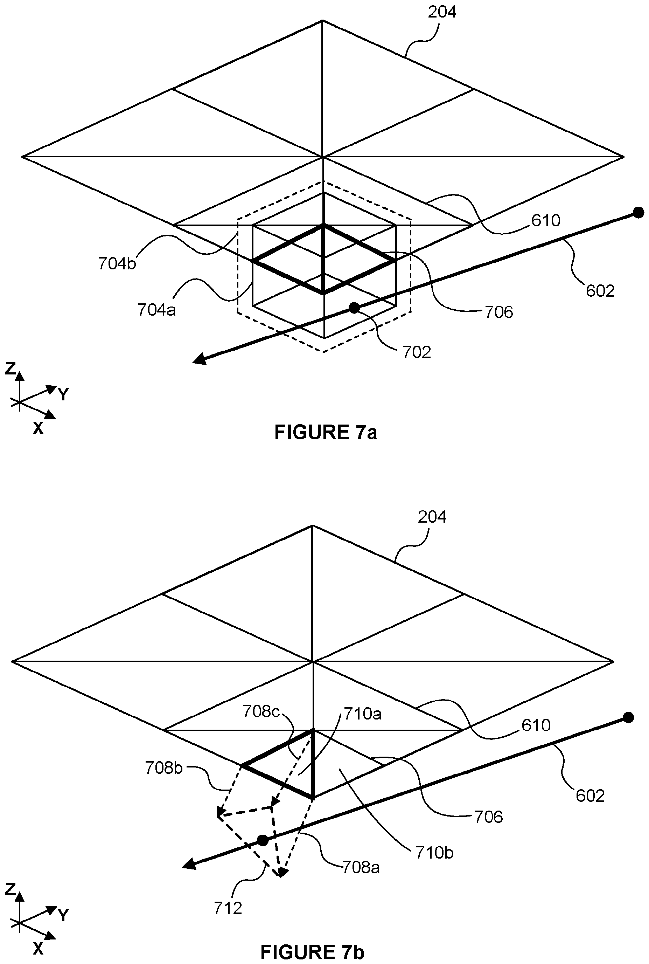

The combination of tessellation schemes in a ray tracing regime in this way thus confers a computational saving, since multiple primitives associated with one or more sub-patches do not need to be generated (by tessellation) in the first place, let alone tested for intersection. This advantage is exemplified as described with reference to the flow chart shown in figure 5, and in figures 6 and 7.

Figure 5 is a flow chart for a method of performing traversal of a ray through the PLAS associated with a particular ray and patch. The method comprises performing box-ray intersections tests and/or tessellation operations and/or primitive-ray intersections tests. The flow chart is intended for illustrative purposes only and is not intended to encompass all possible eventualities associated with different patch geometries or tessellation patterns. Certain pathways or groups of steps within the flowchart may also be repeated in a recursive manner. Alternative pathways are thus possible and would be recognised by a person skilled in the art.

At step S502, data for the ray is obtained: in particular, data defining the components of the ray origin and the ray direction. This ray data pertains to instance space 210 as shown for the ray 208 in figure 2. Data for the instance/model/object space bounding volume is also obtained. Preferably, the bounding volume is a box axis-aligned with the axes of instance space. Alternatively, instead of being obtained, the bounding box may be generated from scratch based on geometry of the patch: e.g., a bounding box axis-aligned with instance space (such as 202 in figure 2) may be calculated so as to bound an oriented bounding box (not shown) oriented with the patch. Since generation of bounding volumes between coordinate-spaces on-the-fly is expensive, it is preferable to store attributes of bounding volumes, e.g., in the leaf node of a BLAS. In some examples, to impart further conservativism with regards to arithmetic error in the intersection testing, the bounding box may be further expanded by a small amount, e.g., by an additional padding value such as a multiple of the machine epsilon value (e.g., for a non-zero normal floating-point value).

At step S504, the bounding box is tested for intersection with the ray in instance space, e.g., as shown in figure 2. In response to a 'miss', the method restarts, i.e., traversal of another aspect of the system is performed, which could involve further traversal of either the TLAS, a BLAS, or the testing of another leaf node of a BLAS (thus, traversal of a new PLAS), i.e., a different patch. Further still, a new ray may be selected for traversal. In response to a 'hit', traversal of the ray continues in the current patch space.

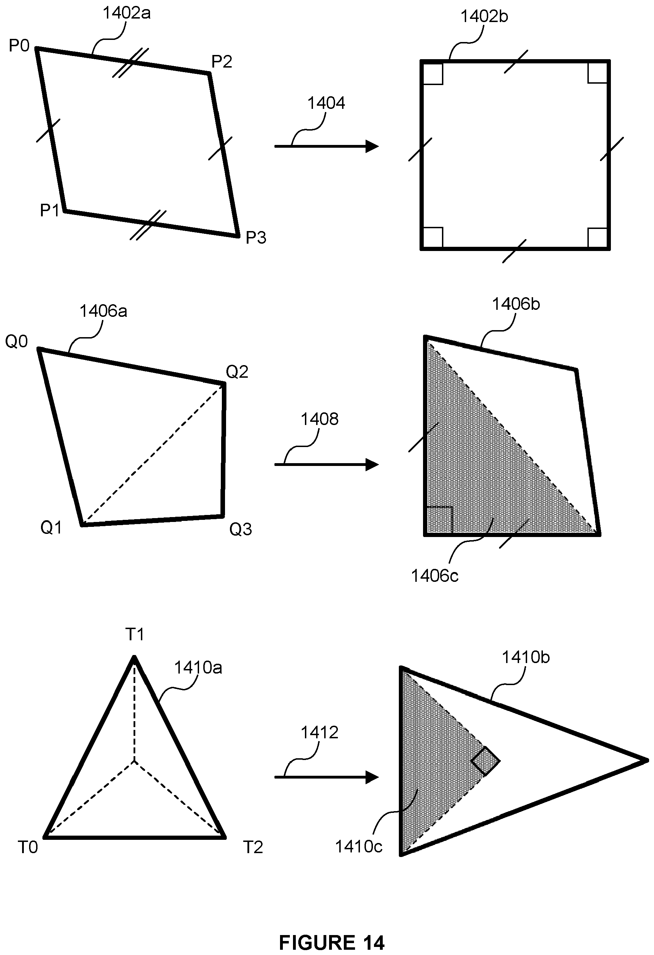

At step S506, the ray is transformed from instance space into patch space 304. The patch 204 itself is also, implicitly, transformed into patch space such that the patch's plane and edges are axis aligned. As mentioned above, the ray transform is specifically chosen so as to map the patch to a set of (normalised) predetermined coordinates, such as $[0, 1]^2$. Thus, preferably, no explicit arithmetic operations are performed on the patch itself. In this example, the transformation involves a translation step to put the $V_0$ vertex (or some other corner vertex of the patch) at the origin of the instance space 210, followed by a linear transformation (though multiple transforms may be needed for non-parallelogram patches). Transformations are described in detail with respect to figure 14. In some examples, the transformation may be precomputed to save compute time for each ray traversal. Generally, computing transforms is computationally expensive so offline computation is beneficial. In examples where the transformation is generated on the fly, the transformation matrix may be cached and re-used for other rays. Alternatively, when storing transformation matrices in the leaf nodes of the BLAS, and since the corner vertices (used to generate the transform) are not needed during PLAS traversal as they are implicitly embedded in the matrix, the components of the matrix transform may be stored instead of the 3D corner vertices as per-patch data, thus saving space. In the case of a quad patch, a 3x4 matrix may exactly replace the four three-dimensional corner vertices as they both comprise twelve floating-point values.

Once in patch space, a conservative AABB, e.g., 302b, is calculated based on minimum and maximum displacement data (which may be retrieved from a predetermined array of normalised components coupled with minimum and maximum displacement values). The min/max data determines the height of the box in the Z axis. The bounding box may then be extended in the X and Y axes in dependence on a 'worst case' lateral displacement of the primitives in the patch. This lateral displacement can be determined from vertex normal data. In conservative examples, yet further padding may be incorporated into the AABB along one or more axes to further ensure watertightness in the final render (at the very least, watertightness would be achieved between any two continuous primitives generated from a single tessellated patch). Furthermore, additional padding may be applied to individual primitives that share an edge with a patch boundary, i.e., as a further conservative measure to guarantee watertightness between contiguous primitives generated from different tessellated patches.

The additional padding value generally corresponds to a small value that almost negligibly increases the extents of the bounding box. The functional aim of the additional padding is to ensure watertightness, whilst affecting the latency of the ray tracing to the smallest possible extent. In other words, the aim of the additional padding is to provide an overlap between bounding volumes of adjacent patches that is small enough not to noticeably impact rendering speed, but which ensures false negative intersection results are avoided. Avoiding false negatives confers multiple advantages, e.g., helping to ensure watertight rendering, and, separately, ensuring deterministic intersections in concurrent (e.g., parallel) implementations where the order of execution may be non-deterministic; in other words, the additional padding helps to ensure that the results of intersection testing is deterministic and thus predictable/repeatable, irrespective of the order in which the intersection tests are performed. The magnitude of the additional padding may be generated based on one of (or a multiple thereof) or a combination of the following: underflow level (UFL), machine epsilon (also called unit roundoff), or ULP (unit in the last place, or unit of least precision). The UFL is the smallest computationally representable absolute amount, and is usually the smallest representable normal floating-point value. The ULP thus dependent on the number of exponent bits used to represent the value. An additional UFL has an almost negligible effect on the value of a floating-point number, and no effect on the value of most floating-point numbers. Thus, the additional padding is preferably proportional to machine epsilon (aka unit roundoff), as this is related to relative error, derived from the ULP (unit in the last place/unit of least precision), which is a function of the number of mantissa bits. Throughout the specification, all references to an "additional padding value", "additional padding" or "further padding" and the like, pertain to one of the above-mentioned values (UFL, ULP, machine epsilon), and preferably machine epsilon, unless otherwise specified.

During PLAS traversal, the normals of the corner vertices of the patch are generally defined in patch space. These normals can in theory be generated from the instance-space normals and the instance transform on the fly. A more computationally efficient method, however, is to generate the corner-vertex normals in patch space offline and subsequently store them as per-patch data (e.g., as part of the BLAS, stored in local memory such as a cache). In this way, the instance-space normals may be stored elsewhere (e.g., in global memory) and used as shading inputs, whereas the patch-space normals may be stored locally and only used for PLAS traversal.

At step S508, the padded AABB, e.g., 302b, is tested for intersection with the ray, e.g., using a box testing unit (BTU). In response to a 'miss', as with step S504, the process restarts, via **A**, and traversal continues along a different pathway (e.g., with a different ray or patch). In response to a 'hit' 308, such as indicated in Figure 3, tessellation of the patch is considered.

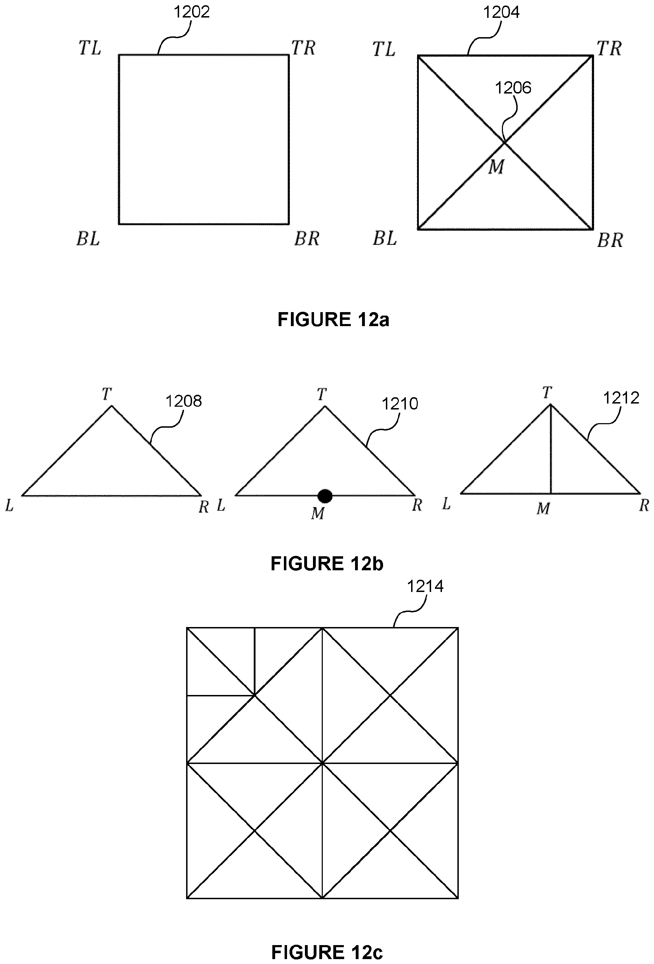

At step S510, tessellation factors for the patch (or sub-patch, following a loop from S516 via pathway D) are obtained. These may comprise tessellation factors, e.g., for each vertex and/or for each edge (and/or possibly a tessellation threshold value). In general, a positive tessellation factor indicates that some degree of tessellation is required. A tessellation factor equal to or less than zero may indicate that the patch should not be tessellated, and may further indicate that the patch should be discarded entirely (i.e., not intersected by any ray). Other implementations are possible, and the skilled person will recognise that the meaning associated with different tessellation factor values is implementation-specific. A pre-determined tessellation algorithm determines how to subdivide the patch based on the tessellation indications, and a preferred method is outlined with reference to figures 12a-c and 13. In general, one or more new vertices are generated, and one or more new edges are formed between existing and/or new vertices, possibly subdividing old edges. Although not specifically exemplified in the present disclosure, in some examples old vertices/edges may be removed entirely). In the preferred method, each new edge bisects a triangular area to form two equally sized sub-triangle areas. Other known tessellation embodiments may shift the position of vertices in parametric/domain space during the generation of new sub-units (e.g., triangles), however, shifting domain-space vertices during subdivision can produce unwanted 'swimming' artefacts in renders after displacement, due to aliasing of the displacement map/function. Thus, preferably, the subdivision maintains the positions of all existing vertices in domain space which has the benefit of avoiding such artefacts. In the preferred method, the tessellation of a quad patch, as shown in figure 4a, results in a plurality of initial triangles. Specifically, the tessellation in figure 4a shows initial tessellation of a quad patch into four triangular sub-units, and subsequent subdivision of each sub-unit into two equally sized triangles (yielding a total of eight triangles). Whenever subdivision has proceeded (e.g., initial tessellation of a patch into triangles, and/or subdivision of a triangle into two sub-triangles), the tessellation factors are updated (e.g., by subtraction of a fixed value). The resulting subdivided patch comprising a set of new sub-units (e.g., triangles) is considered to have a first level of detail (or, 'LOD1') such as indicated in figure 4a. Further subdivision of the sub-units results in second and third levels of detail etc. For example, the second-order sub-patch 706 shown in figure 7a represents a second level of detail, following two further subdivision operations of the triangles formed at the first LOD.

Following step S510, figure 5 indicates branching of the method to one of steps S512 and S514. It is possible to follow either branch first. Alternatively (and, in practice, more likely), the criteria in S512 and S514 may be considered concurrently (e.g., in a parallel implementation), and dependent on the result, one of three pathways is followed (i.e., yes to both, yes to only S512, or yes to only S514). The branch chosen may depend on factors such as the exit condition of the ray under consideration, e.g., being an occluding ray. In examples of the present disclosure, the branch leading to S512 is followed first preferentially. The skilled person would recognise that the ultimate outcome (e.g., any hit versus miss for an occluding ray; closest hit versus miss for an non-occluding ray) is intended to be the same independent of which branch is followed first (i.e., the result is intended to be deterministic, even if the sequence of volume/primitive testing changes), though the efficiency of the algorithm may depend on the selection of which branch is followed first (e.g., finding an early hit may cull subsequent testing). In some cases, box S512 may never be reached (e.g., where a patch is subdivided into four sub-patches, all of which are missed by the ray). It will be understood by the skilled person that the flow of the method shown in figure 5 is merely exemplary. For example, in some cases the second branch leading to S514 may be omitted (since, a 'No' result in S512 results in inferring a 'yes' to S514 via pathway B). In the example shown, the method is constructed such that a 'no' to both S512 and S514 is not possible: i.e., a 'No' result in S512 implies a 'Yes' result to S514 (indicated via pathway B), and vice versa a 'No' to S514 implies a 'Yes' to S512 (indicated via pathway C). Practically speaking, this represents the fact that all patches and sub-patches at any given LOD are constructed such that they contain at least one primitive and/or at least one sub-patch.

At S512, it is determined whether the patch or sub-patch contains any primitives. This step is equivalent to interrogating the tessellation indications to determine whether any further tessellation into primitives is instructed. If it is determined that the (sub-)patch contains no primitives, the method skips via pathway **B** as if S514 has been answered in the affirmative. In other words, a (sub-)patch that contains no primitives implies that it contains only sub-patches, consistent with an affirmative result in S514. If any primitives are determined to be in the (sub-)patch, then the method continues to S518. Consistent with this, the updated tessellation indications may indicate that no further tessellation can take place, from which it can be directly inferred that the sub-patch contains exclusively primitives. In this case, the method would also continue to S518, but would not iterate back to S516 via pathway **B** via S522. After one or more primitives is determined to exist after the subdivision of S510, the one or more primitives (e.g., four primitives in the case of the sub-patch 404 in figure 4c) in the sub-patch are tested for intersection with the ray.

At step S518, displacement data is obtained that is used to displace and perturb one or more primitives in 3D patch space prior to intersection testing. Displacement information for each primitive may be a combination of patch-vertex normals, and displacement data (including min and max displacement values). Further detailed examples are provided below. Primitives are displaced according to their vertex normals (e.g., 408c-e for the primitive 410b in figure 4d), and further displacement data, such as shown as 1000 in figure 10, is subsequently used to perturb the position of the primitive. It can be advantageous, depending on the number of primitives to be displaced and the number of testing units, to displace some or all primitives and subsequently perform intersection tests on each of the already-displaced primitives (serially or concurrently) in order to maximise utilisation of the testing units.

At step S520, the displaced primitive(s) (e.g., primitive 414 in figure 4d) is tested for intersection with the ray. Preferably a TTU unit 114, executing any suitable primitive-ray intersection method, is utilised to perform the test. In response to a 'miss' the TTU 114 iteratively continues to test all remaining primitives (e.g., in figure 4d, three others if primitive 414 had not been hit) identified within the sub-patch. Step S522 provides an escape condition when iterating over the primitives: i.e., if not all primitives have been tested, S522 loops back to S518 and S520 to displace and test another primitive. If all primitives have been tested and none has resulted in a hit, the method restarts via A. Thus, S518 and S520 may alternate between displacing primitives and testing them for intersection with the ray until: i) a 'hit' is found, or ii) all primitives have been determined not to intersect the ray (in particular, this relates to an examples where the ray is an occluding ray such as a shadow ray). This represents only one exit condition, referred to as an 'any hit' exit condition, and, for example, is suitable for processing shadow rays.

In another example in respect of a 'closest-hit' ray (i.e., a non-occluding ray), all primitives within a sub-patch will be intersected in turn, and in each case it will be determined whether a hit occurs. Each time a hit occurs, the ray's hit information is updated if the intersection is closer than previous intersections. In this example, the method follows the dashed arrow from S524 and iterates over S518, S520 (and S524 in response to another hit) for all primitives within the (sub-)patch. In general, the exit condition used is dependent on the type of ray being processed, and appropriate exit conditions will be apparent to the skilled person in this regard. In response to satisfying the appropriate exit condition for a given type of ray, the method ultimately returns via pathway A to the start of the method at S502.

At S524, in response to a 'hit' with a displaced primitive (e.g., as shown at intersection point 412 in figure 4d), shading of the primitive is performed, i.e., a shader is triggered for execution (e.g., any-hit shader, closest-hit shader, etc.), with the intersection information (e.g., winding, barycentrics, distance) as input (alongside other data relating to the intersected primitive derived, e.g., interpolated, from the patch per-vertex attributes). Following the shading, the results are stored in memory 104 and the traversal continues. In some examples (e.g., for a 'closest-hit' ray), even following a successful 'hit' with a displaced primitive, the process may continue to iterative oversteps S518 and S520 to test all primitives in the sub-patch, e.g., because in some examples one primitive may occlude another.

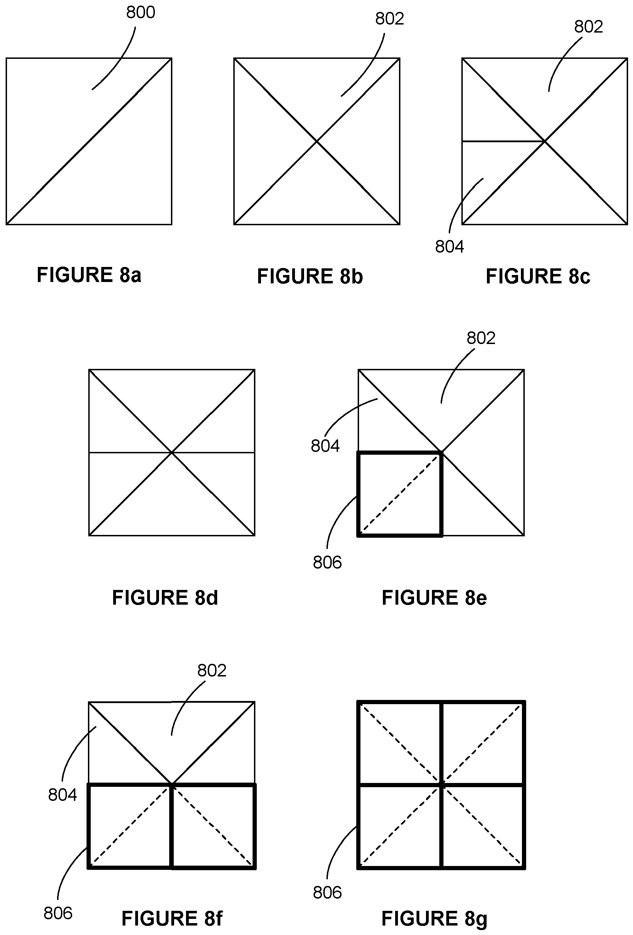

At step S514, it is determined whether a patch or sub-patch contains (further) sub-patches. The step may be reached in some examples directly from S510. Alternatively, S514 is implicitly answered in response to a 'No' at S512. S514 and S512 cannot both result in a negative for any given (sub-)patch, i.e., because patches and sub-patches contain at least one primitive, at least one sub-patch, or a mixture thereof (e.g., as shown in figure 8). Consequently, a 'no' for one of S514 and S512 implies a 'yes' for the other. Generally, S514 involves considering whether the patch or sub-patch contains further sub-patches. This usually involves determining whether/how sub-units (e.g., triangles) of the subdivided patch may be grouped into sub-patches (i.e., sub-quads), i.e., subregions preferably having the same proportions as (or similar to) the parent patch (e.g., quads). For example, the subdivided patch 204 in figure 4a can be grouped into four sub-patches (each containing two right-angled triangles forming a sub-quad). As another example, in figure 4b a sub-patch (i.e., sub-quad) 404 is identified containing two triangles. In practice, this determination may involve counting/determining how many sub-patches (i.e., quads) can be formed (e.g., by grouping together sub-triangles), and checking whether this number of sub-patches is > 0. Following a 'yes' result at S514, a sub-patch is identified/selected at S516.

At step S516, one or more of the sub-patches determined in S514 is identified. Once the sub-patch is selected, a conservative AABB, e.g., 402b, is generated around the sub-patch. The conservative padding is again based on min/max displacement data and 'worst case' lateral displacement of the primitives. Again, the lateral primitive displacement may be derived from the vertex normals of the patch, where the normals for new vertices that define part of the patch can be calculated from the original patch vertex normals, i.e., by (linear) interpolation (with or without renormalisation).

It is advantageous to identify sub-patches even where the sub-patch or patch may turn out to contain only primitives at the next geometric LOD. For example, it is usually more efficient to rule out collections of primitives for intersection testing by instead performing an intersection test on a bounding volume (with a BTU 112) that contains a collection of primitives. In this way, multiple primitive-ray intersection tests may be avoided. Moreover, since primitive-intersection tests may require obtaining primitive displacement data and performing a displacement of a primitive into the 3D patch space, performing one box-ray test is likely to be more efficient than performing one or more triangle-intersection tests. Generally, it is advantageous to rule out or 'cull' primitives wherever possible by performing box-ray intersection tests, where a box-ray intersection test is also generally cheaper (in terms of area/power/latency) than a primitive-ray intersection test. This culling of primitives is inherent in step S526, i.e., because sub-patches bound by volumes that are found not to intersect with a ray in S526 are not further subdivided or tested.

At step S526, the sub-patch AABB (e.g., such as the bounding volume 402b in figure 4c) is tested for intersection with the ray 208. In response to a 'miss', since there may be other sub-patches in the parent patch, the method returns to step S516 to identify a new sub-patch for which to determine a sub-patch AABB and perform a box test. In the hypothetical case that the ray 208 missed the AABB 402b in figure 4b, there are three other sub-patches that would be tested for box-ray intersection. In response to a 'hit', it is determined what to do next with the sub-patch, e.g., in dependence on the geometric LOD of the sub-patch and any primitives contained within the patch. Even in response to a hit, all sub-patches may be tested for volume-ray intersection (at S526), i.e., because a 'hit' AABB may not yield an intersecting primitive (or the closest intersecting primitive for a non-occluding ray), therefore all sub-patches generally are tested for intersection (either upfront in one go, or during a subsequent pass) irrespective of the ray type. One exception is when testing for an occluding ray (during concurrent traversal), during which the testing of any outstanding sub-patches can be halted immediately following a successful (i.e., 'hit') primitive intersection test of the occluding ray. Generally, however, in response to at least one hit, the method returns via pathway D to S510 for each sub-patch intersected at S526. In the case that the bounding volume for the sub-patch turns out to contain exclusively primitives at the next geometric LOD, no further tessellation will be performed at S510.

Figure 5 illustrates the method of traversing a PLAS from the perspective of a single ray, however parallel/concurrent computing is also envisaged, e.g., using multiple ray-tracing units 102 (or multiple sub ray-tracing units 108, 110, 112, 114, 116, etc.) having access to a shared cache or memory 104. In both a parallel and serial computing embodiment, some or all of the bounding volumes generated as part of generating the PLAS may be cached. In a parallel embodiment, any generated nodes of the PLAS may then be used concurrently with other rays. In general, even in serial processing embodiments, nodes of the PLAS may be re-used, without having to be regenerated, for subsequent rays for a given patch, and/or for rays bundled together (e.g., for one or more coherent rays).

Consistent with the possibility to traverse multiple PLAS structures, or more likely multiple parts of the same PLAS structure, in parallel, the method may support packet tracing. In a packet tracing regime, the method is performed for a batch of rays in parallel (e.g., bundled or coherent rays). This means that multiple rays are concurrently 'in-flight', though preferably the concurrent rays will be handled with multiple banks of testers in a SIMD fashion. The structure of the PLAS is stored for one or more rays, together with the parameters used for tessellation and any sub-patch bounding volumes, as the box testing progresses. The results may then be duplicated as inputs across multiple intersection testing units 112 or 114 and/or tessellation modules 116 (or stored in a shared cache to which the testers have shared access) so that the other bundled/coherent rays may re-use previously computed tessellations (e.g., sub-patches, sub-triangles) and sub-patch AABBs. This has the advantage that banks of testers are more likely to be saturated and thus able to make the most efficient use of resources. This also avoids wasting compute time associated with re-generating tessellation data and bounding volumes.

Thus, although each ray traverses its own particular version of the PLAS for a given patch, it is advantageous to make use of commonality between the topology of any many different PLAS versions as possible. In other words, embodiments of the disclosure leverage coherency of rays by 'gathering' them on nodes of the hierarchy, such that multiple rays may be tested against the same volume/primitive at once. This encourages high utilisation of our volume/triangle testers. Thus, even if each ray is associated with slightly different tessellation factors, if it generates the same sub-patch or primitive as another nearby ray, then it is advantageous to process rays at the same time (and thus making use of at least some of the same data). By packeting rays in this way, there is a good chance this will lead to a high overlap of sub-geometry further down the traversal as well, such that the packet can remain live (i.e., without being split up/merged) for multiple levels of detail. There are two general methods for achieving this synergy. The first, as mentioned, is by gathering/bundling groups of rays into packets to be tested in parallel against the same node(s) of the tree. Separately, or in combination with this, parts of the PLAS can be cached for retesting similar (e.g., coherent) rays. The former method maintains better utilisation of testers (i.e., such that banks of testers are saturated), and caching of the PLAS reduces overall computational effort.

Figures 6 and 7 illustrate an alternative embodiment to figure 4, which shows a method of traversing a PLAS consistent with figure 5.

Figure 6a shows the same patch 204 as in figure 4a, bounded by an AABB 302a and a (conservatively) padded AABB 302b. A different ray 602 to figure 4a is shown intersecting with the padded bounding box 302b at intersection point 604. This intersection test corresponds to step S508, since the patch 204 and ray 602 have been transformed already into patch space. The patch is shown as already tessellated for convenience, though the tessellation (i.e., subdivision) of the patch 204 occurs afterwards in step S510 in response to the 'hit' 604. Figure 6a thus shows the sub-patch 610 in the state that is processed according to S512 (i.e., after having been tessellated). After tessellation, a sub-patch 610 is selected for consideration in the next step. According to step S512, it is determined that the sub-patch does not currently contain any primitives (the two triangular sub-units in the sub-patch 610 may be further subdividable, and thus cannot be deemed primitives at this stage). Since S512 determines that no primitives are present, it is inferred that the sub-patch 610 contains one or more sub-patches to be further subdivided, i.e., it is inferred that S514 is answered in the affirmative. Thus, the method proceeds to step S516 where a new sub-bounding box is generated around the sub-patch 610.

Figure 6b shows the padded AABB 606b, having been generated around the sub-patch 610 and based on the min/max displacement data and/or vertex normal data, and/or conservatively further padded with an additional padding value. The padded sub-patch bounding box 606b is generated in accordance with S516. The ray 602 is seen to intersect with the AABB 606b at 'hit' point 608, corresponding to the intersection test at step S526. Although not shown in Figure 6a or 6b (or figure 5), the other three sub-patches have their own sub-patch AABBs that may be generated and tested against the ray 602. For example, steps S516 and S526 preferably iterative to test each of the four possible sub-patch AABBs in turn to determine which (if any) intersect with the ray 602. In response to the successful intersection 608 (corresponding to step S526), pathway D is followed and the new tessellation pattern for the sub-patch 610 is generated (consistent with S510). The new tessellation geometry is indicated in figure 6b. It is then determined in accordance with step S512 whether the newly-tessellated sub-patch 610 contains any primitives. Following the second tessellation step at S510, the local tessellation of the sub-patch 610 shown in figure 6b represents a second LOD.

Consistent with S512, it is determined that the tessellated sub-patch 610 shown in figure 6b does contain primitives. Specifically, four primitives are detected, which correspond to the four triangles not contained within the quad 706 indicated by the dashed boundary. These four primitives are displaced (not shown) and tested for intersection against the ray 602. The displacement and iteration may be performed sequentially (consistent with iterating oversteps S518, S520, and S522). Preferably, to improve utilisation of the testing units, all primitives may be displaced prior to intersection testing (though the improvement in utilisation is dependent on the number of primitives compared to the number of primitive-ray intersection testing units). In this case, none of the four primitives so-far identified within 610 intersects the ray. Therefore, after testing the last of the four primitives, S522 determines that all currently-identified primitives within the tessellated sub-patch 610 have been tested. The remaining sub-quad 706 is then tested, because step S514 (via branch (2)) is performed either before, after, or concurrently with path (1). This sub-patch 706 within a sub-patch 610 may be referred to as a second-order sub-patch.

Figure 7a shows a second order (axis-aligned) bounding volume 704a (preferably enlarged to a conservatively padded AABB 704b) having been generated around the second order sub-patch 706, in accordance with S516. At step S526 (for the second time in our example traversal), the ray 602 is tested for intersection against the padded sub-AABB 704b. In response to a 'hit' 702, it is determined whether the second order sub-patch requires further tessellation (via pathway D) in step S510. In this case, it is determined that the sub-patch 706 does not require further tessellation, and thus implicitly determined (as would be determined in S512) that the second order sub-patch contains primitives (in this case, exclusively primitives). Thus, in figure 7a, it is determined that the two triangles (710a, 710b in figure 7b) in sub-patch 706 are primitives and that no more tessellation is required according to the tessellation indications, and by inference determined that the two triangles are primitives (corresponding to a 'yes' at S512).

Figure 7b illustrates the steps of S518 onwards. Primitive displacement data comprising (linearly) interpolated vertex normals 708a, 708b, 708c is obtained for a first primitive 710a. The primitive 710a is subsequently displaced, by displacing each one of its vertices in the direction of their respective normals and by an amount according to further displacement data (corresponding to a displacement map/function (e.g., texture) and/or minimum and maximum displacement values) to obtain displaced primitive 712, which usually lies outside of the plane of the patch 204, i.e., parametric/domain space. At step S520, the displaced primitive 712 is tested for intersection with the ray 602 (e.g., by a TTU 114), and a 'hit' 712 is determined. Following the hit, the method proceeds to step S524 for shading of the primitive.

Shown according to the dotted arrow after S524, depending on the ray's exit condition, other primitives in the sub-patch (e.g., primitive 710b) may be displaced and tested for intersection with the same (non-occluding) ray 602 even after a hit. Otherwise, following all primitive intersection tests, traversal of a new patch and new corresponding PLAS begins back at step S502 via pathway A.

Figures 8a-8g show seven different local subdivision patterns following a subdivision of a (sub-)patch from one level of detail to a next level of detail. In this set of examples, all triangles (i.e., bounded by solid lines only) are primitives, i.e., they are not further subdividable. The bold squares are sub-patches that contain a plurality of primitives in some configuration, which may only be found by further subdivision to a higher level of detail. Figure 8a shows a minimal tessellation pattern, where the (sub-)patch is bisected between two vertices to form two right angle primitives 800 (and, in some examples, may not be considered a possible initial tessellation pattern for a quad patch). Figure 8b has been subdivided to provide four equal-sized primitives 802. In preferable embodiments, as described in detail below, the tessellation pattern shown in figure 8b is generated by creating a new vertex at the centre of the quad and drawing four new edges between the original vertex corners and the new central vertex. Figures 8c and 8d show two (sub-)patches with further subdivisions to produce yet smaller primitives 804 half the size of the primitives 802 in figure 8b.

In all figures 8a to 8d, the (sub-)patches contain only primitives. If these (sub-)patches were tested consistent with figure 5, the primitives may be displaced and tested iteratively, i.e., by repeating operation of S518 and S520, including any (intermediate or subsequent) shading necessary. Generally, in the embodiments of this disclosure, sub-triangles (802, 804) that do not collectively form a sub-quad are not further tessellated, and are thus considered primitives. All of the sub-triangles formed in figures 8a to 8f are formed after one subdivision operation as per S510, so are of the same geometric LOD, even though the triangles may be of different size (e.g., they differ by a "half" LOD). All triangles in figures 8a to 8f (other than the triangles defined by dashed lines in 8e and 8f) are thus considered primitives because further subdivision cannot occur for them as none of their adjacent sub-triangles can form a sub-patch with them (such as quad 806).

In alternative examples that would be apparent to the skilled person, bounding volumes other than cubic volumes may be created (e.g., prisms for triangular patches, or bounding volumes with simple intersection tests such as spheres). Alternatively, cubic bounding boxes (e.g., AABBs, OBBs) may be generated around non-quad patches. In either case, this may affect efficiency due to more/less bounding volume hits, because such bounding volumes would either be more or less representative of the underlying patch volume (when fully displaced).

Figures 8e, 8f, show subdivided patches with a mixture of sub-patches 806 and primitives 802, 804. The treatment of such patches containing a mixture is consistent with the treatment of the example in figure 6b, i.e., where the sub-patch 610 contains both primitives and a sub-patch 706 around which a bounding box is generated (and where it is not known in the first instance whether the triangles in 706 are primitives or not). In mixture cases, the primitives are tested for intersection with a ray (i.e., at S518 and S520). Either after, before, or preferably concurrently with all primitives have been tested (particularly, for an occluding ray, if all primitives have been tested and none intersects with the ray), any sub-patches (e.g., such as sub-patch 806 in figure 8e) each have a bounding volume created around them. This volume is subsequently intersection tested and, if intersected by the ray, the bounded sub-patch is further tessellated. These three operations are in accordance with steps S516, S526, and S510.. For patches containing exclusively sub-patches (e.g., figure 8g), all sub-patches are tested for intersection with the ray, i.e., conservative AABBs are generated around each patch and each AABB is tested for intersection with the ray.

In general, the method of iterative tessellation and intersection testing aims to exhaust (i.e., tessellate until no further tessellation operations are indicated) all sub-patches until any non-intersecting sub-patches are ruled out and only primitives remain. Figures 6 and 7 imply that primitives generated along the traversal of the PLAS are generally tested first for intersection before testing the sub-patch and (potentially) performing another tessellation step. For example, the sub-patch 610 shown in figure 6b replicates the pattern in figure 8e, and the sequence of figures 6 and 7 indicates that the four primitives (804, 802) are intersection tested (e.g., using a TTU 114) first, prior to testing a bounding volume around the sub-patch 706 with a BTU 112. This order may be performed, in a serial embodiment, because an early 'hit' with a primitive may help rule out further intersection tests. As mentioned above, however, primitive testing (according to path (1) starting with S512 in figure 5) is preferably done concurrently with sub-patch testing (according to path (2) starting with step S514 in figure 5).

For the preferred tessellation method, figures 8a to 8g represent all possible local tessellation patterns (i.e., from one geometric LOD to the next), including both (sub-)patches comprising primitives only, as well as primitive/sub-patch mixtures (which contain primitives that can be grouped into sub-patches, e.g., forming quads). Other tessellation methods may have other sets of local tessellation patterns. Therefore, the seven tessellation patterns indicate the seven topological categories (at a given LOD) that may be formed at each stage in the implicit PLAS hierarchy. It is helpful to pre-determine the possible set of nodal structures of a PLAS for memory storage purposes. Specifically, it is advantageous to know the 'worst case' number of primitive or sub-patch nodes that will be stacked in local memory, e.g., for a depth-first traversal. For example, figure 8d represents six primitive nodes, whereas figure 8f represents 3 primitive nodes and 2 sub-patch nodes. The skilled person will appreciate that the categories shown take account of symmetry, i.e., all possible reflections and rotations of the patterns are accounted for. For example, figure 8b has 4-fold rotational symmetry plus reflectional symmetry and therefore only 1 version exists. In contrast, figure 8c has no rotational symmetry but does have reflectional symmetry, and therefore four possible versions exist (all sharing the same nodal structure, i.e., five primitive nodes).

Figures 9a and 9b show how the patch extents are used to calculate a bounding box around a sub-patch in patch space. In some examples, it would be possible to construct bounding boxes to tightly bound the edges of the patch, e.g., as with the bounding volume 302a around patch 204 in figure 3. However, such tight boxes may not take account of the fact that primitives, once displaced, may protrude the boundary of the tightly bounded box. If the bounding volume does not bound the entire space within which the displaced primitives can exist some intersection tests may result in a 'false negative'. In this scenario, a false negative is when an intersection test falsely returns a 'miss' result when in fact the ray should have intersected with the volume (e.g., box) because the ray would have intersected a displaced primitive within that volume. False negative results in intersection testing are disadvantageous because they can result in 'cracks' or holes forming in a final render. Algorithms which can avoid cracks appearing are referred to as 'watertight'. Consequently, bounding volumes are created in such a way that takes account of the possible extent of displacement of the primitives contained within the bounded patch.

Patches represented in patch space are planar, and the primitives contained within the patch may not have been formed yet (by tessellation). Also, primitives within the planar patch are thus not displaced into their final 3D position. Therefore, prior to the stage of displacing primitives and triangle-intersection testing (e.g., step S518) it is not known precisely how far outside the boundary of the 2D patch the primitive will lie. Consequently, bounding volumes around patches are padded based on the worst-case displacement of primitives within the patch.

Figure 9a shows a patch 900 viewed along the XY plane, contained within a bounding box 902 whose faces are flush with the edges of the patch 900. The height of the bounding volume 902 is determined by $Z_{min}$ and $Z_{max}$ values which indicate the maximum vertical displacement of a primitive below and above the plane of the patch. The $Z_{min}$ and $Z_{max}$ values depend on the level of detail (LOD) of the patch or sub-patch under consideration (in customary examples, $Z_{max}$ is non-negative and $Z_{min}$ is non-positive, e.g., $Z_{min} = -Z_{max}$ for the initial bounding volume). For a whole patch (e.g., patch 204 in figures 2 and 3), these values are given by an original user-supplied interval $[Z_{min}, Z_{max}]$. For sub-patches (e.g., sub-patch 404 in figure 4b, 610 in figure 6b, and 706 in figure 7a)these values are a subinterval derived from the original user-supplied interval $[Z_{min}, Z_{max}]$ and a sequence of predetermined normalised values (e.g., $0 \leftrightarrow 0$ and $255 \leftrightarrow 1$ for 8-bit values). It will be understood that $Z_{min}$ and $Z_{max}$ are used to refer to all min/max ranges at every level of detail, despite the fact that each sub-patch at each LOD represents a different quantized subinterval. For example, the values of $[Z_{min}, Z_{max}]$ may be updated between different sub-patches at different LODs, from a parent sub-patch at a lower LOD (e.g., LOD0 or the previous LOD), according to $[Z_{min}, Z_{max}] = [a, b] * [Z_{min}, Z_{max}] := [Z_{min} + a(Z_{max} - Z_{min}), Z_{min} + b(Z_{max} - Z_{min})]$, where $Z_{min}$ and $Z_{max}$ are either fixed-point, floating-point, normalised, or un-normalised numbers, and a and b are (possibly decompressed/decoded) predetermined fixed-point values (e.g., comprising 8 bits, such as in figure 10), where $a < b$ (and therefore can be considered a subinterval) and where a and b are considered normalised values, i.e., in the interval $[0, 1]$ (e.g., by rescaling them by their maximum). Since the $Z_{min}$ and $Z_{max}$ values are LOD dependent, for higher LODs the min/max displacement values are also region dependent: e.g., the $Z_{min}$ and $Z_{max}$ values for the AABB of the sub-patch 404 in figure 4c may be different to the $Z_{min}$ and $Z_{max}$ values of the AABB surrounding the sub-patch 610 in figure 6b. Again, the min/max values for the second order sub-patch 706 in figure 7a are different. Calculation and storage of these values is described with respect to figures 10 and 11.

The vertical extents of the bounding volume 910 are all that is needed to form a first bounding volume 902. In this example, the vertical displacement 910 is calculated by interpolation from the vertex normals 908a, 908b (normals 908a, 908b, and 910 are intended to be the same length, however figure 9a is not drawn to scale for clarity). The interpolation is done in figure 9a (and not in figure 9b) because vertex normals 908a and 908b have opposite horizontal components (i.e., they do not face the same horizontal direction). Thus, the different directions imply a convex surface, and a 'worst case' vertical normal 910 is calculated based on the vertex normals 908a and 908b. In order to obtain a conservative bounding volume 912, the lateral displacement of primitives within the patch must be obtained or conservatively estimated. The lateral displacements in respect of the X axis of the patch 900 are notionally indicated by two primitive-displacement boxes 904a, 904b (such boxes may not actually be calculated during generation of the padded bounding volume 912). The lateral displacement extents 904a, 904b are indicated by vertex normals 908a, 908b. A quad patch will initially be associated with four vertex normals, i.e., one per vertex. New vertex normals are calculated/estimated (e.g., by linear interpolation) for any new vertices generated by tessellation of the patch. The vertex normals indicate the direction and magnitude of primitives within the patch and can therefore be used to calculate a 'worst case' primitive displacement. In this way, primitives do not actually have to be displaced to calculate the bounding volume. Moreover, primitives may not yet have been formed by tessellation at this stage, so tessellation is also not required prior to building a bounding volume for a patch or sub-patch.

All displacement data (i.e., the min/max displacement values and the vertex normals) are a property of the patch and therefore may be stored with the original acceleration structure (AS) as per-patch data, and may be defined relative to world or instance space. As the magnitude and direction of the vertex normals need to be defined in patch space for PLAS traversal, they may also be transformed into patch/domain space on the fly, prior to calculating the bounding volume extents. Alternatively, they may be transformed offline, and therefore the displacement data may be stored in the AS defined relative to patch space instead (although world/instance-space normals may still be stored separately for other uses, e.g., as input to rending calculations in shaders).The Z axis faces of the tight bounding volume 902 and the lateral-facing faces of the primitive's displacement boxes 904a and 904b can be used to determine the extents of the fully padded bounding volume. The generation of padded bounding volumes for patches corresponds to S506 in the case of parent patches, and to S516 in the case of any sub-patches.

Figure 9b shows an alternative example, illustrating that the vertex normals 916a and 916b may point in the same direction relative to a lateral axis (i.e., the X or Y axis), as opposed to figure 9a, where the vertex normals 908a and 908b point in opposite directions relative to a lateral axis. Since 916a and 916b face the same horizontal direction, the worst-case vertical displacement is effectively already known, and so there is no need to interpolate the vertex normals to calculate an additional vertical displacement (e.g., 910 in figure 9a). However, any vertex normal whose direction is not vertical still implies a lateral displacement outside of the boundary of the patch 900, meaning that the dimensions of the generated conservative bounding box 912 are greater than the dimensions of the patch 900 it bounds. Figures 9a and 9b apply to any sub-patches as well as parent patches, i.e., to sub-patches of any level of detail.

Since the displacement extents to determine conservative bounding volumes are generated on-the-fly, i.e., when partial tessellation patterns are generated during traversal of a ray through a patch, the PLAS may not be known during traversal of a TLAS or BLAS. In other words, the PLAS is implicitly generated on the fly during tessellation. This is in contrast to typical ray-tracing regimes where the full nodal structure of an object, i.e., the structure of a BLAS, must be generated before ray-tracing operations (e.g., intersection testing) can proceed. Indeed, the generation of a BLAS can be a computationally expensive process depending on the heuristic used to generate the split planes, and can represent a bottleneck in the process. Consequently, it is an advantage of the ray tracing tessellation method that the nodal structure of the PLAS need not be known in advance. As previously mentioned, once some or all of a PLAS is known after traversal of a ray, nodes (i.e., volumes, primitives) of the structure can be saved (e.g., cached) and reused for coherent and/or bundled rays that may make use of the same nodes for their particular PLAS. This re-use may not be possible for all rays, however, since a PLAS is a function of the ray and therefore may be completely different (apart from the root node) for non-coherent rays.

In addition to generating an expanded bounding volume based on primitive displacement extents, it is advantageous to conservatively 'pad' bounding volumes to provide an additional degree of overlap between the bounding volumes of adjacent patches. Reference to 'conservative' bounding volumes or 'conservative' AABBs in the present disclosure means a bounding volume that has been expanded or padded along at least one axis to further mitigate false negative tests and therefore ensure watertight rendering. Depending on the arithmetic precision of the intersection testing between rays and bounding volumes, some intersection tests may result in a 'false negative' if boxes are not conservatively padded. By padding bounding volumes around patches and any order of sub-patch, avoiding false negatives inherently becomes part of the volume-ray intersection testing (especially when the volume-ray intersection test does not have its own mechanism for mitigating false negatives). This further padding (corresponding to an additional padding value) is indicated by the small increment 914 shown in figure 9a. The additional padding ensures watertightness in the final render by mitigating false negatives during intersection testing. The amount is chosen not to be so large as to increase latency (i.e., unnecessarily padded bounding volumes will capture more rays that do not intersect primitives within the patch). The small amount 914 may be calculated in a variety of different ways that would be appreciated by the skilled person. As mentioned above, the additional padding value be a multiple of the machine epsilon, which represents an amount equal to the upper bound on the relative approximation error due to rounding in the floating-point precision used by the volume-ray intersection testing algorithm. This type of padding may be particularly suitable for non-zero normal floating-point numbers.

Alternatively, the smallest absolute value representable by the software or hardware may be added (or a multiple thereof), also referred to as the underflow level (UFL). This type of padding may be particularly suitable for zero or denormal floating-point numbers ('inf' or 'nan' floating-point numbers cannot be padded but may still be handled as special-case exception).

Figure 9a shows this small value being added in the X and Z dimensions of the volume 902 (Y axis is not shown), merely for illustration. This small padding value 914 is optional in general, though may be incorporated in one or more dimensions in order to extend the bounding box 912 along one or more axis (to mitigate false negatives, and thus attain or improve watertightness and determinism in the intersection testing). Padding bounding volumes conservatively in this way confers the additional advantage that the need for enhanced-precision (e.g., infinite-precision) intersection tests, or two-part intersection tests, may be avoided. In some general ray tracing embodiments, bounding volumes may be tested at enhanced precision (i.e., ray and/or box geometries are represented with more mantissa and/or exponent bits than found in standard single, or even double, floating-point precision) or 'miss' results may be re-tested at higher precision to avoid additional false negatives. In the present disclosure, these safety measures may be obviated because the bounding volumes surrounding patches are conservatively padded. Yet further, by providing conservative padding in bounding volumes, the precision used by the box testing units 112 may be reduced. This can confer yet a further advantage, since BTUs 112 implemented in hardware can be implemented with a smaller silicon footprint by reducing the precision used by the hardware, thereby reducing the size of the registers and/or arithmetic operations (e.g., adders, multipliers, etc.) in the hardware. This advantage may offset the fact that marginally extended bounding boxes can lead to increased box hits, meaning that slightly less geometry may be culled.

Figure 10 illustrates one method of generating and storing the min/max displacement data (i.e., $Z_{min}$ and $Z_{max}$ values) used to calculate the extents of bounding volumes 912 as indicated in figures 9a and 9b. In this example, consistent with the examples in figures 4, 6, and 7, the patches (represented in domain space) are square. Nevertheless, other patch geometries are possible, and the displacement maps can be correspondingly adapted by adapting the dimensions of the maps (e.g., by affine transformation), as would be recognised by the skilled person. The sampled displacement map of texture values 1000 represents a sampling of a texture at the highest possible tessellation level (i.e., the highest texture LOD). The map 1000 represents vertical displacement positions. The detailed displacement map at 1000 contains 81 (texel) values, corresponding to 81 possible vertices at the highest level of detail, indicating an 8x8 maximally tessellated grid (though more vertices would occur in practice, e.g., for a 64x64 maximally tessellated grid). The two original, user-supplied, values may not always represent a minimum or maximum value: for example, instead of a minimum and maximum grid, the user-supplied values may correspond to endpoint and width, or centre and half-width, etc. For the avoidance of doubt, the detailed displacement map at 1000 does not represent the original, user-supplied, displacement data, but a sampling of the user-supplied data.

Displacement data is needed to generate bounding volumes for patches and sub-patches at every geometric LOD. For example, at the lowest geometric LOD, LODO (1008a and 1008b for a parent patch such as in figure 3), only one minimum value and one maximum value need to be considered (i.e., the respective lowest value 0 and highest value 255 in the map 1000, corresponding to 0 and 1 as normalised values respectively). These may be stored implicitly (i.e., requiring no bits), although the original user-supplied interval, which provides overall scaling of the normalised values, may still be stored as per-patch data. The detailed map 1000 in figure 10 is considered normalised to the interval [0, 1] and encoded with eight-bit digits, therefore it can be pre-determined that the lowest and highest values will be 0, considered as the normalised value 0, and 255, considered as the normalised value 1, respectively. The values may be stored as unsigned integers to reduce storage requirements.

For creating bounding volumes from a pair of min/max values, it is possible to derive/sample the displacement for any LOD from the detailed map 1000 (e.g., by repeated bi-linear interpolation). However, this would take time and would be wasteful to perform on-the-fly for every bounding volume that needs to be created, particularly for low geometric LODs (e.g., at the patch scale 1008a, 1008b) where 81 values would need to be sampled to calculate a single pair of min/max displacement values. The highest texture LOD represented in 1000 is therefore unnecessarily fine-grained for use with lower geometric LODs. Therefore, separate minimum and maximum displacement tables for each LOD can be pre-determined in order to make displacement data retrieval more efficient (in other words, separate texture-LOD min/max tables are generated, and are designed to coincide with the different geometric LODs of a tessellated patch). This LOD-dependent mapping technique is referred to as mipmapping, and such a chain of displacement tables at each LOD is referred to as a min/max mipmap. The minimum 1002a and maximum 1002b tables for the highest level of detail ('LOD3') of the min/max mipmap are shown in figure 10.

The min/max mipmap of figure 10 has been generated to be conservative such that each cell in the minimum map/table/grid 1002a corresponds to the lowest value in a corresponding 2x2 tile of the grid 1000 (which is sampled, at tessellated vertex positions, from the 'original' user-supplied displacement map). Each cell in the maximum grid 1002b corresponds to the highest value in a corresponding 2x2 tile of the grid 1000 (which is sampled at tessellated vertex positions from the 'original' user-supplied displacement map). Specifically, the transition from the original sampled grid 1000 to the LOD3 grids 1002a and 1002b is as follows: for each value at cell position (m, n) in the LOD3 grid, the value chosen for that cell is the minimum (for 1002a) or maximum (for 1002b) value in the 2x2 tile in the sampled grid 1000

defined with positions: $\begin{bmatrix} (m, n) & (m, n+1) \\ (m+1, n) & (m+1, n+1) \end{bmatrix}$ . For example, cell (1, 7) in the min/max LOD3 grid 1002a/b is '81'/'239' (using an indexing system in which both m and n start at 1), because the lowest/highest value in position

$\begin{bmatrix} (1,7) & (1,8) \\ (2,7) & (2,8) \end{bmatrix}$ of the sampled grid 1000 is 81/239 (at the (1,8)/(2,7) position). Hence, the 9x9 grid of original sampled values 1000 is transformed into 8x8 LOD3 grids 1002a and 1002b. The subsequent transitions from LOD3 → LOD2, and from LOD2 → LOD1, etc., are more straightforward in the present example of Figure 10: specifically, the LOD(i) min/max tables are partitioned into 2x2 non-overlapping (i.e., contiguous) tiles, and the lowest/highest value in each of the 2x2 tiles forms the value for the corresponding cell in the LOD(i-1) grid. For example: the highest value in the bottom-most and right-most 2x2 tile in the LOD3 max table 1002b is '255', therefore the bottom-most right-most cell (at position (4, 4)) in the LOD2 max table 1004b is '255'. In this regard, it will be appreciated that it is advantageous to generate the sampled displacement grid at 1000 with dimensions of $(2^n +1)$ by $(2^n + 1)$. This means that the resulting min/max map, at LOD(i) in the min/max mipmap, will have dimensions of $(2^i)$ by $(2^i)$, for $0 \leq i \leq n$, which advantageously corresponds with geometries produced by the preferred mode of tessellation in this disclosure (which generates new vertices at bisection points, because it is a power of two tessellation scheme). In other words, the sampled original user-supplied displacement map 1000 advantageously has dimensions (and indices) lining up with the maximum number (and positions) of tessellated vertices at the highest tessellation LOD of the patch. Similarly, each min/max map in the min/max mipmap has dimensions (and indices) lining up with the maximum number (and positions) of bounding volumes at its respective tessellation LOD.

Subsequent minimum and maximum tables/grids are calculated from these minimum and maximum 1002a, 1002b grids on the principle of conserving the lowest and highest values for a particular region. The two grids for the second highest LOD ('LOD2') have 16 cells each. At this level of granularity, each cell corresponds to a sub-patch the size of a second order sub-patch, e.g., as shown in sub-patch 706 in figure 7a. From the LOD2 maps 1004a, 1004b, the displacement maps at LOD1 can be calculated as shown in minimum LOD1 map 1006a and maximum LOD1 map 1006b in figure 10. The LOD1 maps have four values each, where each cell corresponds to a sub-patch one quarter the area of a parent patch, e.g., the sub-patch 404 of figure 4b. Finally, the lowest level of detail ('LOD0'), corresponding to a whole patch (e.g., 204), is indicated as a single cell having the value of 0 (corresponding to a normalised 0) for the minimum map 1008a and 255 (corresponding to a normalised 1) for the maximum map 1008b. In practice, the values for the LOD0 maps are implicit (i.e., require no storage) in examples where the values are normalised, as they will always corresponding to 0 and $2^n$-1 for a n-bit binary value.

At each stage of traversing a PLAS, the relevant min/max pair of maps can be stored alongside the patch or sub-patch (e.g., as per-patch data in the AS, or otherwise in a cache), depending on the LOD (e.g., lower LODs, which occupy fewer bytes, may be more suitable as per-patch data), to save time in fetching the displacement data. Additionally, since the tables are precomputed for each LOD, the displacement data 1000 based texture sampling does not need to be interrogated every time a lower LOD displacement value is needed. Storing 6 tables across three LOD uses more storage (in this example, 128B + 32 B + 8 B = 168B) than storing the original displacement map (81B). However, pre-computing all displacement data that may be needed for each LOD increases the efficiency of the traversal, allowing for the possibility of real-time (e.g., frame-by-frame) LOD updates in a ray tracing regime.

To provide an illustration of the tables of Figure 10 in use (i.e., to calculate the vertical extents of a bounding volume), figure 4b is used as an example (although the values in figure 10 are not intended to reflect the actual extents of the AABBs shown in figure 4). In this case, after the first level of tessellation shown figure 4a to reach a first level of detail (LOD1), four sub-patches are identifiable within the patch 204, one of which is sub-patch 404. Consistent with S512 of figure 5, sub-patch 404 is identified and the sub-patch extents are retrieved in order to calculate the dimensions of the AABB. Thus, a maximum value is read from one cell of LOD1 table 1006b (in this case, 255) and a minimum value is read from the minimum LOD1 table 1006a (in this case, 0). It is therefore determined that the upper face of the bounding volume ($Z_{max}$) corresponds to a value of 255, and that the lower face corresponds to a value of 0. Ultimately, these values have been derived from the full (sampled) displacement map 1000, however, the pre-computation of the LOD1 min/max tables means that the $Z_{min}$ and $Z_{max}$ values are simply read from tables 1006a and 1006b respectively.

Figures 11a and 11b illustrate a way of compressing the displacement map data of figure 10 (only LOD2 and LOD1 are illustrated, but an analogous mapping exists for all other LODs, e.g., LOD3). As mentioned, the pairs of minimum and maximum displacement dataset values can take up more storage than the detailed map 1000. However, each pair of tables/grids/arrays can be compressed (i.e., quantised) into a single grid having the same number of cells. Figure 11a demonstrates this for the LOD2 table of values. Grid 1004a represents a set of minimum values for a vertical displacement at LOD2, and 1004b represents corresponding maximum displacement values. Each cell in each grid/array corresponds to a cell in the same position in the corresponding grid: e.g., the top-left cell min/max values are 0 and 227 in grids 1004a and 1004b respectively. The inventors have identified that each pair of min/max values can be encoded in a single value. Furthermore, the single encoded value may require even fewer bits than each of the original values. The pair of 8-bit displacement grids 1004a, 1004b is compressed 1100 in figure 11a to form a compressed LOD2 table 1104 with 16 values. Thus, data that originally used 32B of storage requires only 4B (sixteen 2-bit values) of storage once compressed, corresponding to a factor of 8 compression.

In the present example of compressed table 1104 a 2-bit compression system is used, in which pairs of min/max values represented by 8-bit values are encoded into 2-bit binary values according to:

$$Compression(min, max) = \begin{cases} 00 & if \max \geq 128 \text{ and } \min \leq 127 \\ 01 & if \max, \min \leq 127 \\ 10 & if \max, \min \geq 128 \\ 11 & reserved \end{cases}$$

In normalised coordinates, max $\geq$ 128 and min $\leq$ 127 corresponds to [0, 1], max, min $\leq$ 127 corresponds to [0, ½], and max, min $\geq$ 128 corresponds to [1/2, 1]. In other words, if both the min and max values are in the top half of the range ($\geq$ 128), the compressed value is encoded as '10', and if both the min and max values are in the lower half of the range ($\leq$ 127), the compressed value is encoded as '01'. If the min and max values are not both in the same half of the range (e.g., if max $\geq$ 128 and min $\leq$ 127) the compressed value is encoded as '00'. The compression scheme is nested in that it works down the hierarchy (i.e., from LODO to LOD1 and onwards) during traversal of a PLAS, and is generally performed offline. During compression, the encoded (compressed) values for each successive LOD make use of the encoded values of previous LODs. In other words, the interval is updated when transitioning from one LOD to the next. An example would be when moving from LODO to LOD1, where the current interval for LODO is [0, 255] (i.e., corresponding to 8-bit values as in 1008b), and the LOD1 encoding for a particular cell is '01'. In the compression scheme above, '01' corresponds to max,min $\leq$ 127, and the normalised interval of [0, ½]. Thus, during the transition from LODO to LOD1, the 2-bit encoded value corresponding to LOD1 ('01'), is fetched for the given cell, and the following update is carried out: [0, 255] $\rightarrow$ [0, ½] * [0, 255] = [0, 127]. This result is retained and used as input for the next LOD. Advantageously, this means that for each "LODi", encoded value benefits from 2i bits, and hence more precision is gained further down the hierarchy (where it is most required). Analogous to the compression scheme, the decompression scheme also works down the hierarchy during traversal of a PLAS, however the decompression scheme may be performed on-the-fly to benefit from the advantages of compressed data at runtime, such as reduced bandwidth and storage footprints.

In this example '11' is reserved to indicate some other feature pertaining to the corresponding sub-patch/primitive. For example, the value '11' may be reserved to encode transparency/validity information (for example, derived from the alpha channel of a texture), e.g., to allow a ray to immediately skip intersection testing of a primitive or further traversal of a patch sub-quad associated with that value. For example, when it is determined that a primitive (or a sub-quad) is fully transparent or 'invalid' dependent on a compressed value of '11', intersection testing may be immediately avoided (as it is considered fully transparent across the sub-patch and therefore no ray intersection in that subregion should occur.

The skilled person will recognise that the binary encodings are customisable and can be used to represent an arbitrary choice of ranges, provided that the set of encodings include an interval spanning the entire range. For example, a 3-bit encoding system (i.e., having eight possible values) may be used to define eight different min/max ranges (possibly with some reserved encodings supporting additional functionality).

Some information is lost during the encoding by virtue of representing pairs of 8-bit values as 2-bit values (i.e., quantising). Therefore, when the compressed values are read and the minimum and maximum values are calculated, the resulting min/max values may differ from the original. This is acceptable provided that the compression is done conservatively, i.e., to ensure that the range encoded by the compressed values encompasses (i.e., contains) the range defined by the original min/max values.

The compressed table 1104 may thus be decompressed 1102 according to the inverse of the above formula to provide decompressed minimum LOD2 grid 1106a and decompressed maximum LOD2 grid 1106b. It can be seen that some of the original values in the LOD2 tables 1004a, 1004b have been altered during compression, however, the compression is conservative such that the original minimum values are at worst rounded down, and the original maximum values are at worst rounded up. Consequently, the compressed values still provide displacement values that will generate conservative padded bounding volumes, and thus confer watertightness at least in respect of the box-intersection testing. In some circumstances, the compression results in no loss. As shown in figure 11b, LOD1 tables 1006a, 1006b are compressed 110 to form a 4x4 compressed grid 1108 with the value '00'. Following decompression 1102, the decoded values of the min/max grids 11 10a, 1110b are identical to the values in the original grids 1006a, 1006b. Moreover, as explained above, generally speaking due to the nested nature of the compression, more precision, and consequently less error, is obtained in the compressed values further down the traversal of the hierarchy.

In general, this method of compressing displacement values has three advantages. Firstly, fewer values (and in some cases only a single 2-bit value) need to be utilised for each sub-patch (e.g., each quad) to determine data used to construct conservative bounding volumes. This contrasts with the two 8-bit values that would otherwise be read from tables according to the examples in figure 10. Secondly, the compressed values take up far less storage (e.g., instead of two n-bit numbers (e.g., n = 8) being stored, for example, only one 2-bit, or alternatively 3-bit, number is stored). Therefore, some LOD grids (e.g., LOD1, LOD2 and LOD3) of the compressed min/max mipmap may be storable as part of limited per-patch data in the acceleration structure (AS), and/or more higher LODs may be storable in local memory (e.g., a cache) at one time (due to the reduced footprint). In a third respect, due to the much reduced storage requirement, bandwidth and latency are significantly reduced, due to the fact that the number of global memory fetches is reduced overall, which are costly as they have an associated long latency. For example, with 16B reads, using the compression scheme the entire compressed LOD3 table may be fetched in one go, i.e., with a single 16-byte read (in contrast to the eight separate 16B reads required to fetch an uncompressed LOD3 table).

Tessellation Methods

The forgoing examples describe methods of combining tessellation of a patch with a ray tracing pipeline to generate the LOD required for a given ray on the fly. Various methods performing tessellation (i.e., subdivision) of a patch are known in rasterisation embodiments. The overall aim of tessellation in any rendering scheme is to produce a tessellation pattern with the desired level of subdivision, per frame, while maintaining the fewest number of visual artefacts and minimal space/time complexity.

One exemplary algorithm type is described in respect of ray tracing which confers particular advantages in ray tracing regimes, in particular, removing visual artefacts from the final render and guaranteeing watertight rendering. This example is disclosed, in respect of a rasterisation regime, in GB patent GB2533443B, the content of which is incorporated by reference. This method has the advantage of avoiding several types of tessellation artefacts including snapping (the effect of large amounts of tessellation occurring instantaneously, known to occur in other discrete, e.g., 'integer' or other 'power of two', methods), popping (the visual artefact where a primitive changed position/orientation suddenly, which mainly arises when newly formed vertices are immediately displaced), cracking or "holes" (where the viewer can see through the object, often as a result of internal T-junctions or inconsistent tessellation at patch edges boundaries), and swimming (where geometry appears to be unstable as a result of the position of a displaced vertex being moved in domain space).

The inventors have identified that the above-mentioned tessellation scheme has several particular and surprising advantages when applied to a ray-tracing scheme:

1) It performs subdivision into axis-aligned triangles and squares, which is particularly convenient for forming AABBs around as bounding volumes;

2) Vertices do not move in domain space once created, therefore bounding volumes are also static once created, and do not need to be "refitted" as tessellation factors change, e.g., by fractional increments. This is in contrast to other known ray-tracing embodiments, where either a 'refit' or 'rebuild' would be required in order to present a scene at a higher geometric LOD;

3) It is a 'power of two' scheme, i.e., subdivision involves bisecting edges and triangles. This leads to subdividing squares into 2x2 arrangements of sub-quads, making it straightforward to define the bounding volume around a (sub-)quad patch as the union of the bounding volumes of its respective sub-(sub-)quad patches;

4) It is a recursively defined tessellation scheme, meaning it conveniently and surprisingly coincides with the recursive method of traversal. In particular, the geometric (similarly, tessellation) LODs align with the traversal LODs (which both also align with the texture LODs in the min/max mipmap chain).

The present tessellation method uses the following parameters:

$\tau_0 \in \mathbb{R}_{\geq 0}$ The tessellation threshold. The value is usually 0.

$\tau_V \in \mathbb{R}_{\geq 0}$ The tessellation factor (TF) of a vertex V. This has a value of at least 0 (no tessellation) and usually is no more than 6 (max tessellation). This relates to the amount of tessellation to the log base 2, e.g., a tessellation factor of 5 corresponds to $2^5 = 32$ subdivisions.

$\Delta \in \mathbb{R}_{>0}$ The tessellation delta. This encodes the amount by which $\tau_v$ (the tessellation factor) is decremented after each iteration. The tessellation delta is usually 0.5 (which, in practice, coincides with one tessellation step representing 'half' of one geometric LOD, i.e., two tessellation steps represent a transition to the next integer LOD).

$\alpha, f$ $\alpha: \mathbb{R}^2 \cup \mathbb{R}^3 \cup \mathbb{R}^4 \to \mathbb{R}$, a symmetric function giving the "average" of two, three or four tessellation factors. $\alpha$ defines a similar function $f: \mathbb{R}^2 \cup \mathbb{R}^3 \cup \mathbb{R}^4 \to \mathbb{R}$, where $f(\tau) = min(\alpha(\tau), min(\tau) + \Delta)$

The use of both $\alpha$, $f$ to calculate updated tessellation factors is to avoid the creation of 'T-junctions' appearing in the geometry, which causes cracking in a render. Thus, to ensure no cracking, $f$, a modified version of $\alpha$, is used instead.

Figure 12a shows the initial stages of tessellating a quad patch/domain. In the first instance, a quad domain 1202 having four vertices labelled *TL, TR, BL, BR* is fed into a tessellator (such as tessellation module 116). A new vertex 1206, M, is formed at the centre of the quad. The tessellation factor associated with the centre vertex M is given by.

$$\tau_M = f(\tau_{TL}, \tau_{TR}, \tau_{BL}, \tau_{BR}).$$

Next, all the tessellation factors associated with of all five vertices is reduced by $\Delta$ (since one level of tessellation has occurred) to obtain updated tessellation factors. Four new edges are then created, each between one of *TL, TR, BL, BR* and the new vertex M. In other words, four new triangle sub-units are formed within a subdivided quad 1204. Dependent on the new tessellation factors, the four triangle sub-units are then tessellated according to the algorithm, and as shown in figure 12b. After the steps shown in figure 12b have been applied to each of the four triangles in figure 12a, LOD1 will have been reached. From this stage onwards, each LOD increment will comprise two tessellation steps. The quad patch 1202 is a rectangle (preferably a square for numerical convenience) in domain and patch space, though the shape it represents in instance or world space (i.e., in the 3D environment where it forms a portion of an object's surface) may be a different shape (e.g., an arbitrary quad: parallelogram, rhombus, trapezium, kite, delta, irregular quad, etc.). Tessellation is generally performed in domain/patch space, and not in world or instance space.

Figure 12b indicates how the tessellation is performed for triangle units 1208, e.g., such as for the four sub-unit triangles formed in the tessellated quad 1204 of figure 12a. A triangle patch/sub-unit 1208 is considered an ordered set of three vertices (T, L, R). The 'first' vertex is considered the topmost vertex (as shown in figure 12b). Patch tessellation occurs as follows: given a triangle patch, tessellation occurs if and only if the triangle's tessellation factors satisfy: ($\tau_L > \tau_0 \vee \tau_R > \tau_0$). Where this condition is satisfied, a new vertex M is formed as the bisector of the edge LR, i.e., at the point that bisects the longest edge of the triangle 1210. Once formed, a tessellation factor is calculated for the new vertex given by $\tau_M = f(\tau_L, \tau_R)$.

Next, two sub triangle sub-units are formed, (*M,T,L*) and (*M,R,T*), to obtain a tessellation/bisected triangle sub-unit 1212. For each of the existing vertices in the new unit 1212, all four tessellation factors are reduced by $\Delta$ according to:

$$\tau_V \mapsto \begin{cases} 0 & \tau_V < \Delta \\ \tau_V - \Delta & \text{otherwise} \end{cases}$$

If no further tessellation occurs, then it is determined (e.g., in accordance with S510) that the two triangle sub-units in the subdivided unit 1212 are primitives. The two triangle sub-units of the subdivided patch 1212 are thus added to the tessellated domain as a primitive (with either a clockwise or anticlockwise convention, inherited from the winding of the patch corner vertices).

In general, for any geometry of patch, since the tessellation factors are finite and $\Delta$ is a positive constant, the tessellation factors will be at most $\tau_0$ in a finite number of steps hence the process is guaranteed to terminate after a finite number of steps. Figure 12c shows the final state of a tessellated quad 1214 whose starting (log-space) tessellation factors are (2,1, 1,1), corresponding to vertices (*TL,TR,BL,BR*). The final tessellation pattern of this quad corresponds to the final tessellation pattern of the patch 204 in figure 7b.

Figure 13 shows an exemplary tessellation of a quad patch consistent with the algorithm described above to generate the pattern in figure 12c, and according to embodiments of the present disclosure. As mentioned above, the starting quad 1302 is associated with (log-space) tessellation factors (2, 1, 1, 1) as shown. In this example, the tessellation threshold, $\tau_0 = 0.0$, and the tessellation delta, $\Delta = 0.5$. As the first step, as indicated in respect of figure 12a, a new vertex 1304 is added in the centre of the quad with tessellation factor 1.25 (corresponding to the arithmetic mean calculated using $f$ as described above). Four triangle patches are formed in the resulting subdivided unit 1306, corresponding to a first LOD. Each tessellation factor for each vertex is then reduced by the tessellation delta, 0.5, though thus can be done before or after formation of the new edges/primitives.

As the next step, consistent with the steps described for figure 12b, in a recursive manner, each of the triangle sub-units in the patch 1306 is subdivided by placing four new vertices in a bisecting position of the edges of the quad. New edges are then generated which connect the new bisecting vertices with each 'top' vertex of each sub-triangle (i.e., corresponding to the centre vertex 1304 of the parent quad patch 1306). Eight new sub-unit triangles are subsequently formed in the new subdivided quad 1308. All tessellation factors of the quad 1308 are then decreased by the tessellation delta, 0.5, as shown in quad 1310 having updated tessellation factors. The resulting subdivided quad 1310 represents a first level of detail (i.e., LOD1).

In a next recursive step, for each of the eight triangle sub-units in the quad 1310, the 'bottom' edge of each of the eight sub-triangles (i.e., longest edge as shown) is sub-divided (since the tessellation factor of the centre vertex is 0.25, and thus greater than the tessellation threshold of 0) by adding new vertices at the point of bisection (i.e., halfway along the longest edge). New tessellation factors are thus calculated for each of the eight new vertices. After generating eight new edges between the eight new vertices and the 'top' vertex of each sub-triangle, sixteen new sub-units are formed as shown in subdivided quad 1312.

All tessellation factors of the quad 1312 are decreased by 0.5 again. The resulting tessellation factors are zero in all but the top left vertex. Consequently, two final subdivisions are made in the top left corner since the tessellation factor of only the top left vertex (with tessellation factor 0.5) is above the threshold. After this step, and the subsequent tessellation factor update, all vertex tessellation factors are at most 0 (given that vertex tessellations factors are designed to be non-negative) and the process terminates. The result is fully-tessellated patch 1214 as in figure 12c, representing a second level of detail (i.e., LOD2).

As described above, tessellation of the patches is performed in domain space, i.e., 2-dimensional space, where the patch is planar. Initially, as shown in figure 2, the patch lies in instance space (i.e., the 3D space in which the geometry of an object is defined) or even world space (the 3D space in which the larger scene, containing the objects, is defined). The patch, ray, and bounding volumes, therefore, need to be defined in, or transformed into, patch space. Depending on the geometry of the patch in instance space, a different transform algorithm may be used.

Figure 14 shows three different transforms according to three different patch geometries. As described above, according to the embodiments in figures 2 to 7, the patch is a parallelogram 1402a in instance space. The parallelogram patch 1402a therefore satisfies $P_3 = P_1 + P_2 - P_0$, and also satisfies $|(P_1 - P_0) \times (P_2 - P_0)| > 0$, i.e., the patch is non-degenerate. The parallelogram patch 1402a shown in figure 14 represents a patch in instance or world space, where the diagonal dashes indicate sides having equal lengths.

The transform of patch 1402a begins with a translation to place one vertex (e.g., $P_0$) at the origin of the instance space coordinates, e.g., the bottom left corner of the square 1402b, corresponding to the origin of coordinate system 210 shown in figure 2. The next step involves applying a matrix transform, $M^{-1}$, to the ray, where that transform is a single linear transform . In other words, a single matrix multiplication is applied that preserves lines (collinearity) and parallelism but does not necessarily preserve distance and angles. Hence, after applying the transformation step 1404, the resulting patch 1402b is preferably a square (i.e., the angles and edge lengths having been transformed, e.g., to right angles and normalised lengths respectively, but the collinearity of the patch is maintained). As mentioned above, the transform is intentionally constructed to provide convenient 2D coordinates for the patch, thus, the transform is explicitly applied to the ray, but not to the patch. The transform of the patch is thus achieved implicitly by having transformed the ray by the inverse matrix described below. An arbitrary scale factor may also be applied, by leveraging the degree of freedom in the linear transformation (corresponding to the length of the Z axis in patch-space, i.e., the axis perpendicular to XY domain space). It is convenient for this factor to be positive, to avoid flipping the orientation of the patch, due to flipping the orientation of patch space. The matrix, M, whose inverse represents the single linear transformation, is constructed as follows:

$$x = P_1 - P_0$$

$$y = P_2 - P_0$$

$$z = \frac{\lambda(x \times y)}{\|x \times y\|}$$

$$M = [x \ \ y \ \ z] = \left[ x \ \ y \ \ \frac{\lambda(x \times y)}{\|x \times y\|} \right]$$

In other words, the matrix M is given by the three column vectors of x, y, and z. Consequently, the transform applied to the instance space coordinates, $P_{IS}$, to obtain the patch space coordinates, $P_{PS}$, is as follows:

$$P_{PS} = M^{-1}(P_{IS} - P_0)$$

where the inverse matrix can be derived to be:

$$M^{-1} = \frac{1}{(x \times y) \cdot z}\begin{bmatrix} y \times z \\ z \times x \\ x \times y \end{bmatrix} = \begin{bmatrix} \dfrac{(y \cdot y)x - (x \cdot y)y}{\|x \times y\|^2} \\ \dfrac{(x \cdot x)y - (x \cdot y)x}{\|x \times y\|^2} \\ \dfrac{z}{\lambda^2} \end{bmatrix}$$

The inverse matrix is preferably pre-determined, e.g., computed 'offline' and stored ready for use. Advantageously, the values of the matrix can be stored as per-patch data in place of the patch vertex coordinates, which (in domain/patch space) are no longer required as they are embedded in the affine transformation.

Other patch-related information is also transformed, e.g., the patch normals used to calculate part of the bounding volumes extents. To avoid transforming multiple patch normals from world/instance space to patch space on-the-fly, which may be computationally costly, the normals for each vertex of a patch are preferably transformed 'offline' and stored as 'patch-space coordinates' in memory local to the patch. Since the vertex normals for sub-patches are calculated (e.g., by interpolation) from the parent patch data, the transform may be carried out only once for each of the patch vertex normals.

The instance to patch space transform 1404, modelled as an affine mapping, would not be sufficient to handle all degrees of freedom with non-parallelograms 1406a. Thus, in alternative examples, a non-affine mapping, such as a piecewise-affine map, may be used to handle non-parallelogram patches 1406a, 1410a. For example, a non-parallelogram quad patch 1406a may be transformed using a double transformation 1408 into patch space. Although an affine mapping is sufficient to handle the degrees of freedom of a triangle patch, the tessellation method described herein would use a triple transformation into patch space, since the presently described tessellation scheme treats a triangle patch as three distinct quarters of a quad patch. Nevertheless, in principle, any patch geometry could work given an appropriate tessellation scheme.

Figure 14 shows a non-parallelogram quadrilateral patch 1406a, e.g., where there are at least three different edge lengths, having vertex coordinates $Q_0$, $Q_1$, $Q_2$, $Q_3$. For such a non-parallelogram patch 1406a to be transformed 1408 (via one of a two-piece affine transformation) into a patch 1406b that may be tessellated according to the methods described, the following values are calculated which may then be applied to the origin and, respectively, to the inverse matrix transform, $M^{-1}$, as described above:

$$'P_0' = Q_0, \quad x_0 = Q_1 - Q_0, \quad y_0 = Q_2 - Q_0$$

$$'P_0' = Q_3, \quad x_1 = Q_2 - Q_3, \quad y_1 = Q_1 - Q_3$$

In the case of the non-parallelogram quadrilateral patch 1406a, the transformed patch 1406b comprises a portion 1406c (i.e., the right-angled triangle shaded in 1406b) that represents one half of the numerically convenient quad patch in domain space as described above (i.e., where the triangle vertices are aligned with the corners of $[0, 1]^2$). One half of the instance-space patch 1406a is transformed to form this portion 1406c, where the other half of the instance space patch has its own transform aligning it with the other half of the numerically convenient quad patch (not shown in figure 14). When handled as part of the ray-tracing regime, the shaded region 1406c (which represents half of a standard (single) quad patch in domain space) is bounded by a standard bounding volume, i.e., a rectangular AABB. Thus, in this case the AABB contains a single triangle rather than a quad/square, and the other (non-shaded) triangle shown in 1406b (as well as any sub-triangles, contained in this triangle, formed by subsequent subdivision of sub-quads along the shared diagonal edge) is culled from consideration (and handled separately with its own transform and bounding volumes, etc.). In other words, the ray-tracing scheme operates in the same way in terms of intersection testing and tessellation as for a parallelogram quad patch, the difference being that the non-parallelogram quadrilateral patch is handled in a twofold manner, with appropriate masking.

For a triangular patch 1410a in instance space (having vertices $T_0$, $T_1$, $T_2$) to be transformed 1412 (via one of a three-piece affine transformation) into a patch 1410b that may be tessellated according to the tessellation methods described, the following three values are calculated which may then be applied to the origin and, respectively, to the inverse matrix transform, $M^{-1}$, as described above:

$$'P_0' = T_0, \quad x_0 = \frac{2T_2 - T_1 - T_0}{3}, \quad y_0 = T_1 - T_0$$

$$'P_0' = T_1, \quad x_1 = \frac{2T_0 - T_2 - T_1}{3}, \quad y_1 = T_2 - T_1$$

$$'P_0' = T_2, \quad x_2 = \frac{2T_1 - T_0 - T_2}{3}, \quad y_2 = T_0 - T_2$$

In the transformed triangular patch 1410b, the shaded portion 1410c represents a right-angled triangle, and occupies a quarter of a quad patch with numerically convenient coordinates, i.e., occupies exactly one sub-triangle of a standard quad patch after initial subdivision. In a similar manner to the non-parallelogram quad patch, this portion 1410c of the transformed triangle patch will preferably have its own transform and be bound by its own AABBs during the ray-tracing process, where tessellation will be handled in the same way as described for the parallelogram embodiments (though in a threefold manner for the triangular patch example). It can be verified that at least one tessellation factor of the corner vertices of the triangle patch exceeds the tessellation threshold (e.g., strictly greater than zero) before performing each one of the three piece-wise affine transformations, to ensure that initial subdivision of the triangle patch occurs. Otherwise, no transformation is performed, and the entire triangle patch is tested for intersection with the ray as a single triangle primitive, e.g., by TTU 114.

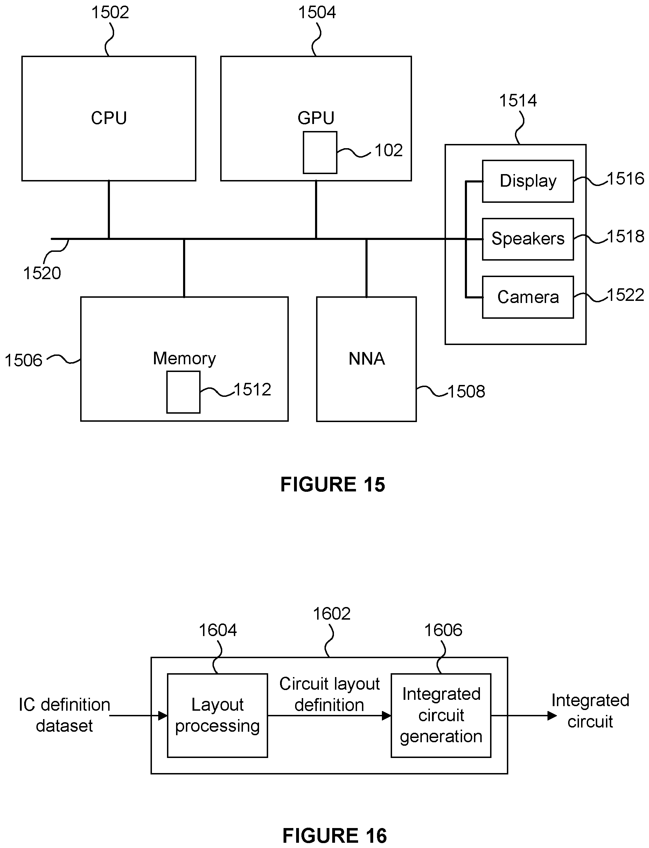

Figure 15 shows a computer system in which the graphics processing systems described herein may be implemented. The computer system comprises a CPU 1502, a GPU 1504, a memory 1506, a neural network accelerator (NNA) 1508 and other devices 1514, such as a display 1516, speakers 1518 and a camera 1522. A processing block 102 (as in figure 1) is implemented on the GPU 1504. In other examples, one or more of the depicted components may be omitted from the system, and/or the processing block 102 may be implemented on the CPU 1502 or within the NNA 1508. The components of the computer system can communicate with each other via a communications bus 1520. A store 1512 (corresponding to store 104) is implemented as part of the memory 1506.

The ray tracing system of figure 1 is shown as comprising a number of functional blocks. This is schematic only and is not intended to define a strict division between different logic elements of such entities. Each functional block may be provided in any suitable manner. It is to be understood that intermediate values described herein as being formed by a ray tracing system need not be physically generated by the ray tracing system at any point and may merely represent logical values which conveniently describe the processing performed by the ray tracing system between its input and output.

The ray tracing units, and specifically the intersection testing module and other modules comprised therein including the tessellation module, may be embodied in hardware on an integrated circuit. The ray tracing units described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a ray tracing system or ray tracing unit configured to perform any of the methods described herein, or to manufacture a ray tracing system or ray tracing unit comprising any apparatus described herein. An integrated circuit definition dataset may be, for example, an integrated circuit description.

Therefore, there may be provided a method of manufacturing, at an integrated circuit manufacturing system, a ray tracing tessellation system or ray tracing unit as described herein. Furthermore, there may be provided an integrated circuit definition dataset that, when processed in an integrated circuit manufacturing system, causes the method of manufacturing a ray tracing tessellation system or ray tracing unit to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a ray tracing tessellation system or ray tracing unit will now be described with respect to Figure 16.

Figure 16 shows an example of an integrated circuit (IC) manufacturing system 1602 which is configured to manufacture a ray tracing system as described in any of the examples herein. In particular, the IC manufacturing system 1602 comprises a layout processing system 1604 and an integrated circuit generation system 1606. The IC manufacturing system 1602 is configured to receive an IC definition dataset (e.g., defining a ray tracing system as described in any of the examples herein), process the IC definition dataset, and generate an IC according to the IC definition dataset (e.g., which embodies a ray tracing system as described in any of the examples herein). The processing of the IC definition dataset configures the IC manufacturing system 1602 to manufacture an integrated circuit embodying a ray tracing system as described in any of the examples herein.

The layout processing system 1604 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1604 has determined the circuit layout it may output a circuit layout definition to the IC generation system 1606. A circuit layout definition may be, for example, a circuit layout description.

The IC generation system 1606 generates an IC according to the circuit layout definition, as is known in the art. For example, the IC generation system 1606 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1606 may be in the form of computer-readable code which the IC generation system 1606 can use to form a suitable mask for use in generating an IC.

The different processes performed by the IC manufacturing system 1602 may be implemented all in one location, e.g., by one party. Alternatively, the IC manufacturing system 1602 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a ray tracing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 16 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 16, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of compressing data for representing displacement information in a ray tracing system, wherein the displacement information indicates displacements to be applied to geometry in a scene to be rendered by the ray tracing system, the method comprising:

   retrieving a pair of datasets representing the displacement information, wherein a first of the datasets comprises a first array of values, and a second of the datasets comprises a second array of values;
   retrieving values from a corresponding array position in each of the first and second arrays, wherein the retrieved values form a pair of values representing an upper and lower bound of a magnitude of displacement for the corresponding array position;
   identifying which of a plurality of predetermined conditions the pair of values satisfies; and
   encoding the pair of values as a single value in a compressed dataset, wherein the single value represents the identified predetermined condition.

2. A method according to claim 1, comprising repeatedly performing the encoding for all pairs of values comprised in the pair of datasets, wherein the compressed dataset comprises compressed displacement information for all information in the pair of datasets.

3. A method according to claim 1 or 2, wherein the pair of datasets representing displacement information represents a mipmap having been sampled from texel data representing a texture to be applied to the geometry in the scene.

4. A method according to any preceding claim, wherein the encoded single value representing the identified predetermined condition is represented with fewer bits than each value of the pair of values.

5. A method according to any preceding claim, comprising compressing a plurality of pairs of datasets representing displacement information to form a plurality of compressed datasets, wherein each compressed dataset of the plurality of compressed datasets represents a different level of texture detail in the scene to be rendered, and wherein each cell of each compressed dataset is generated in dependence on a plurality of regionally corresponding cells of a compressed dataset having a finer level of texture detail.

6. A method according to any preceding claim, comprising:

decoding the compressed dataset to obtain at least one pair of values representing an upper and lower bound of a magnitude of displacement, wherein the compressed dataset is associated with a patch within the scene; determining a bounding volume that contains the patch, wherein at least one dimension of the bounding volume is determined in dependence on the pair of values; and responsive to determining that the ray intersects the bounding volume, in dependence on tessellation indications associated with the patch, subdividing the patch one or more times to obtain a plurality of patch sub-units.

7. A method according to any preceding claim, wherein the predetermined condition is that the pair of values is encompassed by a predetermined range of values, and wherein the encoded single value represents the predetermined range.

8. A method according to any preceding claim, wherein one or more values available to encode the pair of values as a single value is reserved to represent a property of a texture to be applied to the geometry in the scene.

9. A method according to any preceding claim, wherein a first of the datasets comprises a first array of values representing minimum displacements, and a second of the datasets comprises a second array of values representing maximum displacements, wherein the upper and lower bound of a magnitude of displacement is represented by the pair of values as a respective maximum and minimum displacement value.

10. A method according to any preceding claim, wherein a first of the datasets comprises a first array of values of midpoint displacements, and a second of the datasets comprises a second array of values representing halfwidth displacements, wherein the upper and lower bound of a magnitude of displacement is represented by the pair of values as a respective mid-point and halfwidth value.

11. A method according to any preceding claim, wherein the upper and lower bound of a magnitude of displacement are configured to define boundaries of a bounding volume, associated with a respective position of the scene, to be used by the ray tracing system.

12. A method according to any preceding claim, comprising decompressing the compressed dataset by:

retrieving the compressed dataset comprising an array of values, wherein each value of the array of values is an encoded value representing one of the plurality of predetermined conditions; retrieving a value from the compressed dataset; selecting, in dependence on the retrieved value, one of the plurality of predetermined conditions; in response to determining that the selected predetermined condition represents a predetermined range of values: generating a pair of values, wherein the pair of values represents the upper and lower bound associated with the predetermined range of values, and relates to the upper and lower bound of the magnitude of displacement for the corresponding array position.

13. A hardware unit, for use in a ray tracing system, wherein the hardware unit is configured to:

retrieve a pair of datasets representing the displacement information, wherein a first of the datasets comprises a first array of values, and a second of the datasets comprises a second array of values; retrieve values from a corresponding array position in each of the first and second arrays, wherein the retrieved values form a pair of values representing an upper and lower bound of a magnitude of displacement for the corresponding array position;

identify which of a plurality of predetermined conditions the pair of values satisfies; and
encode the pair of values as a single value in a compressed dataset, wherein the single value represents the identified predetermined condition.

14. A computer readable storage medium having stored thereon an integrated circuit definition dataset that, when processed in an integrated circuit manufacturing system, configures the integrated circuit manufacturing system to manufacture a hardware unit as claimed in claim 13.

15. Computer readable code configured to cause the method of any of claims 1 to 12 to be performed when the code is run.

100

102

104

106 — Processing module

108

112 — Box intersection testing unit(s)

114 — Triangle intersection testing unit(s)

Geometric data →

116 — Tessellation module

Ray data →

Instance transform unit

118

Intersection testing module

Tessellation data →

110 — Processing logic

Displacement data →

Ray tracing unit

Memory

**FIGURE 1**

**FIGURE 2**

**FIGURE 3**

**FIGURE 4a**

**FIGURE 4b**

**FIGURE 4c**

**FIGURE 4d**

(A) → Obtain ray data, obtain/calculate bounding box data ⟷ S502

**No** ← Does ray intersect bounding box? ⟍ S504

(A)

**Yes**

Transform ray and patch from instance space to patch space, obtain patch extents data, and generate padded axis-aligned bounding box (AABB) ⟍ S506

**No** ← Does ray intersect patch-space AABB? ⟍ S508

**Yes**

(D) → Obtain tessellation factors for (sub-)patch and subdivide to next level of detail ⟍ S510

(1)    (2)

S512 ⟍ Does (sub-)patch contain primitives? —**No**→ (B)

**No**← Does (sub-)patch contain sub-patches? ⟍ S514

(C)

(C) → **Yes**

**Yes** ← (B)

S518 ⟍ Obtain displacement data and displace primitive(s) ←**No** S522

Identify a sub-patch, obtain sub-patch extents, and generate padded sub-patch AABB ⟍ S516

All primitives tested? —**Yes**→

S520 ⟍ Does ray intersect displaced primitive(s)? **No**

(A)

S526 ⟍ Does ray intersect sub-patch AABB? —**No**

**No**

**Yes**

S524 ⟍ Perform shading of primitive

**Yes**

(D)

**FIGURE 5**

38

FIGURE 6a

FIGURE 6b

**FIGURE 7a**

**FIGURE 7b**

**FIGURE 8a**

**FIGURE 8b**

**FIGURE 8c**

**FIGURE 8d**

**FIGURE 8e**

**FIGURE 8f**

**FIGURE 8g**

**FIGURE 9a**

**FIGURE 9b**

FIGURE 10

FIGURE 11a

FIGURE 11b

FIGURE 12a

FIGURE 12b

FIGURE 12c

FIGURE 13

FIGURE 14

**FIGURE 15**

**FIGURE 16**

Europäisches
Patentamt

European
Patent Office

Office européen
des brevets

# EUROPEAN SEARCH REPORT

**Application Number**

EP 24 16 0999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | THONAT THEO ET AL: "Tessellation-free displacement mapping for ray tracing", ACM TRANSACTIONS ON GRAPHICS, ACM, NY, US, vol. 40, no. 6, 10 December 2021 (2021-12-10), pages 1-16, XP059179523, ISSN: 0730-0301, DOI: 10.1145/3478513.3480535 * sections 1, 3, 4.2 and 4.4 * | 1-15 | INV. H04N19/597 H04N19/94 G06T15/06 G06T17/20 |
| Y | BEERS ANDREW C ET AL: "Rendering from compressed textures", PROCEEDINGS OF THE 3RD INTERNATIONAL CONFERENCE ON INDUSTRIAL AND ENGINEERING APPLICATIONS OF ARTIFICIAL INTELLIGENCE AND EXPERT SYSTEMS - VOLUME 2, ACMPUB27, NEW YORK, NY, USA, 1 August 1996 (1996-08-01), pages 373-378, XP058610376, DOI: 10.1145/237170.237276 ISBN: 978-1-4503-8946-4 * the whole document * | 1-15 | |

TECHNICAL FIELDS
SEARCHED (IPC)

H04N
G06T

The present search report has been drawn up for all claims

| Place of search | Date of completion of the search | Examiner |
|---|---|---|
| The Hague | 28 June 2024 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2303377 A
- GB 2303378 A
- GB 2533443 B